# EUROPEAN PATENT APPLICATION

(11) **EP 4 329 362 A1**
(43) Date of publication of application: **28.02.2024**
(21) Application number: 22798533.0
(22) Date of filing: 22.03.2022
(51) Int. Cl.: H04W 24/10

(54) **METHOD AND APPARATUS FOR REPORTING CELL OR CARRIER INFORMATION**

(30) Priority: 06.05.2021 CN 202110492363
(71) Applicant: Huawei Technologies Co., Ltd., Longgang Shenzhen, Guangdong 518129 (CN)
(72) Inventor: ZHANG, Lili, Shenzhen, Guangdong 518129 (CN); DAI, Xizeng, Shenzhen, Guangdong 518129 (CN); LIU, Jianghua, Shenzhen, Guangdong 518129 (CN)
(74) Representative: Maiwald GmbH
(86) International application number: PCT/CN2022/082161
(87) International publication number: WO 2022/233191

(57) **Abstract**

This application provides a method and an apparatus for reporting cell or component carrier information. The method includes: determining whether at least one uplink component carrier satisfies a first condition, where the at least one uplink component carrier belongs to a first cell, and the first cell is a cell of a first network device (S210); and when there is an uplink component carrier that satisfies the first condition in the at least one uplink component carrier, sending at least one of the following items to the first network device or a second network device: signal strength of the first cell, an identifier of the first cell, signal strength of a downlink component carrier of the first cell, channel state information of the uplink component carrier that satisfies the first condition in the at least one uplink component carrier, and an identifier of the uplink component carrier that satisfies the first condition in the at least one uplink component carrier. According to the method and the apparatus for reporting cell information in embodiments of this application, cell quality can be accurately determined.

## Description

This application claims priority to Chinese Patent Application No. 202110492363.1, filed with the China National Intellectual Property Administration on May 6, 2021 and entitled "METHOD AND APPARATUS FOR REPORTING CELL OR COMPONENT CARRIER INFORMATION", which is incorporated herein by reference in its entirety.

### TECHNICAL FIELD

This application relates to the communication field, and more specifically, to a method and an apparatus for reporting cell or component carrier information.

### BACKGROUND

With development of communication technologies, a network has an increasingly high requirement on uplink and downlink peak data rates. In carrier aggregation (carrier aggregation, CA), two or more component carriers (component carrier, CC) may be aggregated to support a higher transmission bandwidth. In the CA, cells may be defined as a primary cell (primary cell) and a secondary cell (secondary cell), where the primary cell includes an uplink (uplink, UL) component carrier and a downlink (downlink, DL) component carrier.

In a flexible spectrum access (flexible spectrum access, FSA) technology, a cell may include one downlink component carrier and a plurality of uplink component carriers without being limited by a CA requirement, and for any cell, a frequency band on which an uplink component carrier is located may be higher than a frequency band on which a downlink component carrier is located. In this case, for some services that have a higher requirement on a frequency band, or when uplink and downlink component carriers are decoupled, a transmission performance requirement cannot be satisfied by only relying on signal strength of a downlink component carrier.

Therefore, how to improve accuracy of determining cell quality is an urgent problem to be resolved currently.

### SUMMARY

This application provides a method and an apparatus for reporting cell or component carrier information, to enable determining of cell quality relatively accurate. Further, accuracy of determining the cell quality is improved, so that a terminal device can be handed over to a cell that better satisfies a requirement, and a probability that the terminal device needs to be handed over again because the terminal device is handed over to an inappropriate cell is reduced. In this way, overheads and a delay that are generated accordingly are avoided.

According to a first aspect, a method for reporting cell or component carrier information is provided. The method includes: determining whether at least one uplink component carrier satisfies a first condition, where the at least one uplink component carrier belongs to a first cell, and the first cell is a cell of a first network device; and when there is an uplink component carrier that satisfies the first condition in the at least one uplink component carrier, sending at least one of the following items to the first network device or a second network device: signal strength of the first cell, an identifier of the first cell, signal strength of a downlink component carrier of the first cell, channel state information of the uplink component carrier that satisfies the first condition in the at least one uplink component carrier, and an identifier of the uplink component carrier that satisfies the first condition in the at least one uplink component carrier. The first condition is at least one of the following items: Signal strength of a downlink component carrier associated with the uplink component carrier is greater than or equal to a first threshold; and the channel state information of the uplink component carrier is greater than or equal to a second threshold.

Optionally, the solution may alternatively be expressed as: determining whether at least one uplink component carrier satisfies a first condition, where the at least one uplink component carrier belongs to a first cell; and when there is an uplink component carrier that satisfies the first condition in the at least one uplink component carrier, sending at least one of the following items to a first network device or a second network device: signal strength of the first cell, an identifier of the first cell, signal strength of a downlink component carrier of the first cell, channel state information of the uplink component carrier that satisfies the first condition in the at least one uplink component carrier, and an identifier of the uplink component carrier that satisfies the first condition in the at least one uplink component carrier. The first condition is at least one of the following items: Signal strength of a downlink component carrier associated with the uplink component carrier is greater than or equal to a first threshold; and the channel state information of the uplink component carrier is greater than or equal to a second threshold.

Optionally, the solution may alternatively be expressed as: determining that a first uplink component carrier satisfies a first condition, where the first uplink component carrier and a first downlink component carrier belong to a first cell, and the first cell is a cell of a first network device; and sending first information to the first network device or a second network device, where the first information includes at least one of the following items: signal strength of the first cell, an identifier of the first cell, signal strength of a downlink component carrier of the first cell, channel state indication information of the first uplink component carrier, and an identifier of the first uplink component carrier.

Optionally, the solution may alternatively be expressed as: determining whether an uplink component carrier of a first cell satisfies a first condition, where the first cell is a cell of a first network device; and when the uplink component carrier of the first cell satisfies the first condition, sending first information to the first network device or a second network device, where the first information includes at least one of the following items: signal strength of the first cell, an identifier of the first cell, signal strength of a downlink component carrier of the first cell, channel state indication information of the first uplink component carrier that is of the first cell and that satisfies the first condition, and an identifier of the uplink component carrier that is of the first cell and that satisfies the first condition.

Optionally, the solution may alternatively be expressed as: determining that an uplink component carrier of a first cell satisfies a first condition, where the first cell is a cell of a first network device; and sending first information to the first network device or a second network device, where the first information includes at least one of the following items: signal strength of the first cell, an identifier of the first cell, signal strength of a downlink component carrier of the first cell, channel state indication information of the first uplink component carrier that is of the first cell and that satisfies the first condition, and an identifier of the uplink component carrier that is of the first cell and that satisfies the first condition.

Optionally, the first network device may be a neighboring base station, and the second network device may be a serving base station.

As described above, the first information is sent to the first network device or the second network device. The first information may include but is not limited to the following selection manners.

Case 1: The signal strength of the first cell is sent to the network device or the second network device. The signal strength of the first cell is the signal strength of the downlink component carrier of the first cell.

Case 2: The signal strength of the first cell and the identifier of the first cell are sent to the network device or the second network device. The signal strength of the first cell is the signal strength of the downlink component carrier of the first cell.

Case 3: The identifier of the first cell and the channel state information of the uplink component carrier that satisfies the first condition in the at least one uplink component carrier are sent to the network device or the second network device.

Case 4: The signal strength of the first cell, the identifier of the first cell, and the channel state information of the uplink component carrier that satisfies the first condition in the at least one uplink component carrier are sent to the network device or the second network device. The signal strength of the first cell is the signal strength of the downlink component carrier of the first cell.

Case 5: The identifier of the first cell, the channel state information of the uplink component carrier that satisfies the first condition in the at least one uplink component carrier, and the identifier of the uplink component carrier that satisfies the first condition in the at least one uplink component carrier are sent to the network device or the second network device.

Case 6: The signal strength of the first cell, the identifier of the first cell, and the channel state information of the uplink component carrier that satisfies the first condition in the at least one uplink component carrier are sent to the network device or the second network device. The signal strength of the first cell is the signal strength of the downlink component carrier of the first cell.

Case 7: The signal strength of the first cell, the identifier of the first cell, the channel state information of the uplink component carrier that satisfies the first condition in the at least one uplink component carrier, and the identifier of the uplink component carrier that satisfies the first condition in the at least one uplink component carrier are sent to the network device or the second network device. The signal strength of the first cell is the signal strength of the downlink component carrier of the first cell.

In any one of the cases, optionally, the downlink component carrier of the first cell is the first downlink component carrier. The first cell includes a first uplink component carrier and a first downlink component carrier that satisfy the first condition.

In any one of the cases, optionally, the signal strength of the first cell is the signal strength of the downlink component carrier of the first cell.

In any one of the cases, optionally, the signal strength of the first cell is an average value of the signal strength of the downlink component carrier of the first cell and signal strength of the first uplink component carrier that satisfies the first condition.

In any one of the cases, optionally, the signal strength of the first cell is smaller signal strength between the signal strength of the downlink component carrier of the first cell and signal strength of the first uplink component carrier that satisfies the first condition.

In any one of the cases, optionally, the channel state information of the uplink component carrier that satisfies the first condition in the at least one uplink component carrier may be smallest channel state information in channel state information of uplink component carriers that satisfy the first condition in the at least one uplink component carrier, or may be channel state information of an uplink component carrier that satisfies the first condition and that has smallest channel state information in the at least one uplink component carrier.

In any one of the cases, optionally, the channel state information of the uplink component carrier that satisfies the first condition in the at least one uplink component carrier may be average channel state information of channel state information of uplink component carriers that satisfy the first condition in the at least one uplink component carrier, or may be an average value of channel state information of all uplink component carriers that satisfy the first condition in the at least one uplink component carrier. Optionally, when the channel state information of the uplink component carrier that satisfies the first condition in the at least one uplink component carrier is the average value, information sent by a terminal device to the first network device or the second network device may carry a quantity of uplink component carriers that satisfy the first condition.

In the solution, whether the at least one uplink component carrier satisfies the condition is determined, to further determine the first cell, and information about the first cell is reported to the network device, so that requirements of different services can be satisfied, and a cell that satisfies a requirement can be relatively accurately located.

With reference to the first aspect, in some implementations of the first aspect, the downlink component carrier associated with the uplink component carrier belongs to a same frequency band as the uplink component carrier.

It should be understood that the frequency band may also be understood as a frequency. For example, a higher frequency band may be understood as a higher frequency. A lower frequency band may be understood as a lower frequency. In the solution, the downlink component carrier associated with the uplink component carrier belongs to the same frequency band as the uplink component carrier, so that a channel state of the uplink component carrier can be approximated based on a channel state of the downlink component carrier associated with the uplink component carrier. Different attenuation experienced by different frequencies on a channel does not cause a channel state estimation deviation.

With reference to the first aspect, in some implementations of the first aspect, the downlink component carrier associated with the uplink component carrier and the uplink component carrier are located on frequency bands that can approximate channel state information of each other.

In the solution, the downlink component carrier associated with the uplink component carrier and the uplink component carrier are located on the frequency bands that can approximate the channel state information of each other. This helps obtain a channel state of the uplink component carrier based on a channel state of the downlink component carrier associated with the uplink component carrier. Even if different frequencies experience different attenuation on a channel, a value or a range of channel state information of one party may still be approximately estimated based on the other party and a specific offset corresponding to the different frequencies.

With reference to the first aspect, in some implementations of the first aspect, the downlink component carrier associated with the uplink component carrier and the uplink component carrier belong to a second cell.

In the solution, there is also a conventional downlink component carrier and a conventional uplink component carrier. Channel state information of the downlink component carrier may be used to effectively approximate the channel state information of the uplink component carrier.

With reference to the first aspect, in some implementations of the first aspect, the method further includes: determining channel state indication information of the at least one uplink component carrier based on signal strength of a downlink component carrier associated with the at least one uplink component carrier.

In the solution, the uplink component carrier is associated with the downlink component carrier, and the state indication information of the uplink component carrier may be determined based on the signal strength of the downlink component carrier, so that signaling overheads and a delay can be reduced.

With reference to the first aspect, in some implementations of the first aspect, the method further includes: sending a random access signal on the at least one uplink component carrier, where the random access signal is used by the first network device to measure a channel state of the at least one uplink component carrier; and receiving a random access response RAR from the first network device, where the RAR includes channel state information of the at least one uplink component carrier.

In the solution, the random access signal is sent on the at least one uplink component carrier, so that random access channel access can be performed in advance, to reduce a delay caused by a delay, and reduce additional system overheads.

With reference to the first aspect, in some implementations of the first aspect, the method further includes: sending a first signal on the at least one uplink component carrier, where the first signal is used by the first network device to measure a channel state of the at least one uplink component carrier; and receiving channel state indication information of the at least one uplink component carrier from the second network device.

In the solution, the first signal may be detected by the first network device, or may be used by the second network device for detection. When being used by the first network device for detection, the first signal may not be affected by TA inaccuracy. To be specific, the first network device may not be affected by an estimation deviation caused by TA inaccuracy when determining the channel state information. When the first signal is used by the second network device for detection, the second network device may obtain the channel state information based on the first signal. Therefore, no additional system overheads are caused.

With reference to the first aspect, in some implementations of the first aspect, the first signal is further used by the second network device to measure the channel state indication information of the at least one uplink component carrier.

In the solution, the first signal may be used as a specially designed signal, and is not subj ect to inaccurate signal estimation caused by TA inaccuracy. In this way, incorrect determining is avoided when detection is performed based on the signal. In addition, compared with a preamble, the first signal has lower overheads. Therefore, determining the channel state information by using the first signal can reduce system overheads and avoid impact of TA inaccuracy. The first signal may further be used by the second network device for common channel state determining.

With reference to the first aspect, in some implementations of the first aspect, the first signal is a sequence having a cyclic prefix CP in a front or a remote interference management RIM signal.

In the solution, the first signal is a sequence having a CP or a RIM signal, so that the network device is not affected by TA during detection.

With reference to the first aspect, in some implementations of the first aspect, the channel state information of the uplink component carrier includes at least one of the following items: reference signal received power, reference signal strength, a path loss, and channel state indication information.

According to a second aspect, a method for reporting cell or component carrier information is provided. The method includes: receiving at least one of the following items: signal strength of a first cell, an identifier of the first cell, signal strength of a downlink component carrier of the first cell, channel state indication information of an uplink component carrier that satisfies a first condition in at least one uplink component carrier, and an identifier of the uplink component carrier that satisfies the first condition in the at least one uplink component carrier. The at least one uplink component carrier belongs to the first cell, the first cell is a cell of a first network device, and the first condition is at least one of the following items: Signal strength of a downlink component carrier associated with the uplink component carrier is greater than or equal to a first threshold; and channel state information of the uplink component carrier is greater than or equal to a second threshold.

It should be understood that the receiving at least one of the following items may be receiving, by the first network device, at least one of the following items, or may be receiving, by a second network device, at least one of the following items. The first network device may be a neighboring base station, and the second network device may be a serving base station.

Optionally, the solution may alternatively be expressed as: A first network device or a second network device receives first information, where the first information includes at least one of the following items: signal strength of a first cell, an identifier of the first cell, signal strength of a downlink component carrier of the first cell, channel state indication information of a first uplink component carrier, and an identifier of the first uplink component carrier, where the first uplink component carrier satisfies a first condition, the first uplink component carrier and a first downlink component carrier belong to the first cell, and the first cell is a cell of the first network device.

Optionally, the solution may alternatively be expressed as: A first network device or a second network device receives first information, where the first information includes at least one of the following items: signal strength of a first cell, an identifier of the first cell, signal strength of a downlink component carrier of the first cell, channel state indication information of a first uplink component carrier that is of the first cell and that satisfies a first condition, and an identifier of the uplink component carrier that is of the first cell and that satisfies the first condition, where the uplink component carrier of the first cell satisfies the first condition, and the first cell is a cell of the first network device.

In the solution, information about the first cell is received, and the first cell is determined based on whether the first uplink component carrier satisfies the first condition, so that requirements of different services can be satisfied, and a cell that satisfies a requirement can be relatively accurately located.

With reference to the second aspect, in some implementations of the second aspect, the downlink component carrier associated with the uplink component carrier belongs to a same frequency band as the uplink component carrier.

With reference to the second aspect, in some implementations of the second aspect, when the receiving at least one of the following items is the receiving, by the first network device, at least one of the following items, the method further includes: receiving, by the first network device, a random access signal on the at least one uplink component carrier; measuring, by the first network device, a channel state of the at least one uplink component carrier based on the random access signal; and sending, by the first network device, a random access response RAR, where the RAR includes channel state information of the at least one uplink component carrier.

With reference to the second aspect, in some implementations of the second aspect, when the receiving at least one of the following items is the receiving, by the first network device, at least one of the following items, the method further includes: receiving, by the first network device, a first signal on the at least one uplink component carrier; and measuring, by the first network device, a channel state of the at least one uplink component carrier based on the first signal.

With reference to the second aspect, in some implementations of the second aspect, when the receiving at least one of the following items is the receiving, by a second network device, at least one of the following items, the method further includes: receiving, by the second network device, a first signal on the at least one uplink component carrier, where the first signal is used by the first network device to measure a channel state of the at least one uplink component carrier.

With reference to the second aspect, in some implementations of the second aspect, the method further includes: measuring, by the second network device, the channel state of the at least one uplink component carrier based on the first signal.

With reference to the second aspect, in some implementations of the second aspect, the first signal is a sequence having a cyclic prefix CP in a front or a remote interference management RIM signal.

With reference to the second aspect, in some implementations of the second aspect, the channel state information of the uplink component carrier includes at least one of the following items: reference signal received power, reference signal strength, a path loss, and channel state information.

According to a third aspect, a method for reporting cell or component carrier information is provided. The method includes: determining that at least one uplink component carrier satisfies a first condition, where a first downlink component carrier and the at least one uplink component carrier belong to a first cell, and a second downlink component carrier and the at least one uplink component carrier belong to a second cell; and sending at least one of the following items to a first network device or a second network device: signal strength of the first cell, an identifier of the first cell, signal strength of the downlink component carrier of the first cell, signal strength of the second cell, an identifier of the second cell, and signal strength of the second downlink component carrier. The first condition is at least one of the following items: Signal strength of a downlink component carrier associated with the uplink component carrier is greater than or equal to a first threshold; and channel state information of the uplink component carrier is greater than or equal to a second threshold.

With reference to the third aspect, in some implementations of the third aspect, the first cell and the second cell are target multi-connectivity of the terminal device.

With reference to the third aspect, in some implementations of the third aspect, it is determined that the first downlink component carrier satisfies a measurement reporting event or that the first downlink component carrier satisfies a second condition, where the second condition includes: Signal strength of the first downlink component carrier is greater than or equal to a third threshold.

In the solution, through multi-connectivity, it is ensured that a terminal can be connected to different links at the same time. When a link is interrupted, the terminal is quickly and effectively switched to another connected link, to ensure service continuity.

According to a fourth aspect, a method for reporting cell or component carrier information is provided. The method includes: receiving at least one of the following items: signal strength of a first cell, an identifier of the first cell, signal strength of a downlink component carrier of the first cell, signal strength of a second cell, an identifier of the second cell, and signal strength of a second downlink component carrier, where at least one uplink component carrier satisfies a first condition, a first downlink component carrier and the at least one uplink component carrier belong to the first cell, and the second downlink component carrier and the at least one uplink component carrier belong to the second cell. The first condition is at least one of the following items: Signal strength of a downlink component carrier associated with the uplink component carrier is greater than or equal to a first threshold; and channel state information of the uplink component carrier is greater than or equal to a second threshold.

With reference to the fourth aspect, in some implementations of the fourth aspect, the first cell and the second cell are target multi-connectivity of the terminal device.

With reference to the fourth aspect, in some implementations of the fourth aspect, it is determined that the first downlink component carrier satisfies a measurement reporting event or that the first downlink component carrier satisfies a second condition, where the second condition includes: Signal strength of the first downlink component carrier is greater than or equal to a third threshold.

According to a fifth aspect, an apparatus for reporting cell or component carrier information is provided. The apparatus includes a processing unit and a transceiver unit. The processing unit is specifically configured to determine whether at least one uplink component carrier satisfies a first condition, where the at least one uplink component carrier belongs to a first cell, and the first cell is a cell of a first network device; and the transceiver unit is specifically configured to: when there is an uplink component carrier that satisfies the first condition in the at least one uplink component carrier, send at least one of the following items to the first network device or a second network device: signal strength of the first cell, an identifier of the first cell, signal strength of a downlink component carrier of the first cell, channel state information of the uplink component carrier that satisfies the first condition in the at least one uplink component carrier, and an identifier of the uplink component carrier that satisfies the first condition in the at least one uplink component carrier. The first condition is at least one of the following items: Signal strength of a downlink component carrier associated with the uplink component carrier is greater than or equal to a first threshold; and the channel state information of the uplink component carrier is greater than or equal to a second threshold.

Optionally, the solution may alternatively be expressed as: The processing unit is specifically configured to determine that a first uplink component carrier satisfies a first condition, where the first uplink component carrier and a first downlink component carrier belong to a first cell, and the first cell is a cell of a first network device; and the transceiver unit is specifically configured to send first information to the first network device or a second network device, where the first information includes at least one of the following items: signal strength of the first cell, an identifier of the first cell, signal strength of a downlink component carrier of the first cell, channel state indication information of the first uplink component carrier, and an identifier of the first uplink component carrier.

Optionally, the solution may alternatively be expressed as: The processing unit is specifically configured to determine whether an uplink component carrier of a first cell satisfies a first condition, where the first cell is a cell of a first network device; and the transceiver unit is specifically configured to: when the uplink component carrier of the first cell satisfies the first condition, send first information to the first network device or a second network device, where the first information includes at least one of the following items: signal strength of the first cell, an identifier of the first cell, signal strength of a downlink component carrier of the first cell, channel state indication information of the first uplink component carrier that is of the first cell and that satisfies the first condition, and an identifier of the uplink component carrier that is of the first cell and that satisfies the first condition.

Optionally, the solution may alternatively be expressed as: The processing unit is specifically configured to determine that an uplink component carrier of a first cell satisfies a first condition, where the first cell is a cell of a first network device; and the transceiver unit is specifically configured to send first information to the first network device or a second network device, where the first information includes at least one of the following items: signal strength of the first cell, an identifier of the first cell, signal strength of a downlink component carrier of the first cell, channel state indication information of the first uplink component carrier that is of the first cell and that satisfies the first condition, and an identifier of the uplink component carrier that is of the first cell and that satisfies the first condition.

With reference to the fifth aspect, in some implementations of the fifth aspect, the downlink component carrier associated with the uplink component carrier belongs to a same frequency band as the uplink component carrier.

With reference to the fifth aspect, in some implementations of the fifth aspect, the processing unit is further configured to determine channel state indication information of the at least one uplink component carrier based on signal strength of a downlink component carrier associated with the at least one uplink component carrier.

With reference to the fifth aspect, in some implementations of the fifth aspect, the transceiver unit is further configured to: send a random access signal on the at least one uplink component carrier, where the random access signal is used by the first network device to measure a channel state of the at least one uplink component carrier; and receive a random access response RAR from the first network device, where the RAR includes channel state information of the at least one uplink component carrier.

With reference to the fifth aspect, in some implementations of the fifth aspect, the transceiver unit is further configured to: send a first signal on the at least one uplink component carrier, where the first signal is used by the first network device to measure a channel state of the at least one uplink component carrier; and receive channel state indication information of the at least one uplink component carrier from the second network device.

With reference to the fifth aspect, in some implementations of the fifth aspect, the first signal is further used by the second network device to measure the channel state indication information of the at least one uplink component carrier.

With reference to the fifth aspect, in some implementations of the fifth aspect, the first signal is a sequence having a cyclic prefix CP in a front or a remote interference management RIM signal.

With reference to the fifth aspect, in some implementations of the fifth aspect, the channel state information of the uplink component carrier includes at least one of the following items: reference signal received power, reference signal strength, a path loss, and channel state indication information.

According to a sixth aspect, an apparatus for reporting cell or component carrier information is provided. The apparatus includes a transceiver unit, configured to receive at least one of the following items: signal strength of a first cell, an identifier of the first cell, signal strength of a downlink component carrier of the first cell, channel state indication information of an uplink component carrier that satisfies a first condition in at least one uplink component carrier, and an identifier of the uplink component carrier that satisfies the first condition in the at least one uplink component carrier. The at least one uplink component carrier belongs to the first cell, the first cell is a cell of a first network device, and the first condition is at least one of the following items: Signal strength of a downlink component carrier associated with the uplink component carrier is greater than or equal to a first threshold; and channel state information of the uplink component carrier is greater than or equal to a second thresh

It should be understood that the transceiver unit is configured to receive at least one of the following items may be that a transceiver unit of the first network device receives at least one of the following items, or may be a transceiver unit of a second network device receives at least one of the following items. The first network device may be a neighboring base station, and the second network device may be a serving base station.

Optionally, the solution may alternatively be expressed as: A transceiver unit is configured to receive first information, where the first information includes at least one of the following items: signal strength of a first cell, an identifier of the first cell, signal strength of a downlink component carrier of the first cell, channel state indication information of a first uplink component carrier, and an identifier of the first uplink component carrier, where the first uplink component carrier satisfies a first condition, the first uplink component carrier and a first downlink component carrier belong to the first cell, and the first cell is a cell of a first network device.

Optionally, the solution may alternatively be expressed as: A transceiver unit is configured to receive first information, where the first information includes at least one of the following items: signal strength of a first cell, an identifier of the first cell, signal strength of a downlink component carrier of the first cell, channel state indication information of a first uplink component carrier that is of the first cell and that satisfies a first condition, and an identifier of the uplink component carrier that is of the first cell and that satisfies the first condition, where the uplink component carrier of the first cell satisfies the first condition, and the first cell is a cell of a first network device.

With reference to the sixth aspect, in some implementations of the sixth aspect, the downlink component carrier associated with the uplink component carrier belongs to a same frequency band as the uplink component carrier.

With reference to the sixth aspect, in some implementations of the sixth aspect, the transceiver unit is further configured to: receive a random access signal on the at least one uplink component carrier; and send, by the first network device, a random access response RAR, where the RAR includes channel state information of the at least one uplink component carrier; and a processing unit is configured to measure a channel state of the at least one uplink component carrier based on the random access signal.

With reference to the sixth aspect, in some implementations of the sixth aspect, the transceiver unit is further configured to receive a first signal on the at least one uplink component carrier; and a processing unit is further configured to measure a channel state of the at least one uplink component carrier based on the first signal.

With reference to the sixth aspect, in some implementations of the sixth aspect, the transceiver unit is further configured to receive a first signal on the at least one uplink component carrier, where the first signal is used by the first network device to measure a channel state of the at least one uplink component carrier.

With reference to the sixth aspect, in some implementations of the sixth aspect, a processing unit is configured to measure the channel state of the at least one uplink component carrier based on the first signal.

With reference to the sixth aspect, in some implementations of the sixth aspect, the first signal is a sequence having a cyclic prefix CP in a front or a remote interference management RIM signal.

With reference to the sixth aspect, in some implementations of the sixth aspect, the channel state information of the uplink component carrier includes at least one of the following items: reference signal received power, reference signal strength, a path loss, and channel state information.

According to a seventh aspect, an apparatus for reporting cell or component carrier information is provided. The apparatus includes a processing unit and a transceiver unit. The processing unit is specifically configured to determine that a first downlink component carrier satisfies a first condition, where the first downlink component carrier and at least one uplink component carrier belong to a first cell, a second downlink component carrier and the at least one uplink component carrier belong to a second cell, and the first cell and the second cell are target multi-connectivity of a terminal device. The transceiver unit is specifically configured to send at least one of the following items to a first network device or a second network device: signal strength of the first cell, an identifier of the first cell, signal strength of a downlink component carrier of the first cell, signal strength of the second cell, an identifier of the second cell, and signal strength of the second downlink component carrier.

According to an eighth aspect, an apparatus for reporting cell or component carrier information is provided. The apparatus includes: a transceiver unit, configured to receive at least one of the following items: signal strength of a first cell, an identifier of the first cell, signal strength of a downlink component carrier of the first cell, signal strength of a second cell, an identifier of the second cell, and signal strength of a second downlink component carrier, where a first downlink component carrier satisfies a first condition, the first downlink component carrier and at least one uplink component carrier belong to the first cell, the second downlink component carrier and the at least one uplink component carrier belong to the second cell, and the first cell and the second cell are target multi-connectivity of a terminal device.

According to a ninth aspect, a communication apparatus is provided. The communication apparatus includes a processor and a storage medium, the storage medium stores instructions, and when the instructions are run by the processor, the communication apparatus is enabled to perform the method according to any one of the first aspect or the possible implementations of the first aspect, or perform the method according to any one of the second aspect or the possible implementations of the second aspect, or perform the method according to any one of the third aspect or the possible implementations of the third aspect, or perform the method according to any one of the fourth aspect or the possible implementations of the fourth aspect.

According to a tenth aspect, a computer-readable storage medium is provided. The computer-readable storage medium includes instructions, and when the instructions are run by a processor, the method according to any one of the first aspect or the possible implementations of the first aspect, the method according to any one of the second aspect or the possible implementations of the second aspect, the method according to any one of the third aspect or the possible implementations of the third aspect, or the method according to any one of the fourth aspect or the possible implementations of the fourth aspect is implemented.

According to an eleventh aspect, a computer product is provided. The computer program product includes instructions, and when the instructions are run by a processor, the method according to any one of the first aspect or the possible implementations of the first aspect, the method according to any one of the second aspect or the possible implementations of the second aspect, the method according to any one of the third aspect or the possible implementations of the third aspect, or the method according to any one of the fourth aspect or the possible implementations of the fourth aspect is implemented.

According to a twelfth aspect, a chip system is provided. The chip system includes: a processor, configured to invoke a computer program from a memory and run the computer program, so that a communication device in which the chip system is installed performs the method according to any one of the first aspect or the possible implementations of the first aspect, or performs the method according to any one of the second aspect or the possible implementations of the second aspect, or performs the method according to any one of the third aspect or the possible implementations of the third aspect, or performs the method according to any one of the fourth aspect or the possible implementations of the fourth aspect.

According to a thirteenth aspect, a communication system is provided, including the apparatus according to the fifth aspect and the apparatus according to the sixth aspect, or the apparatus according to the seventh aspect and the apparatus according to the eighth aspect.

In this application, a terminal device reports related information of a first cell to a first network device or a second network device. During cell handover, when one downlink component carrier corresponds to a plurality of uplink component carriers in a same cell, and the plurality of uplink component carriers are distributed at different radio remote sites, determining both a downlink component carrier and an uplink component carrier by the terminal device during handover helps correctly select a target handover cell, and avoids mistakenly selecting a cell that cannot satisfy an uplink service. When multi-connectivity link addition or switching is performed in a cell, if one downlink component carrier corresponds to a plurality of uplink component carriers in a same cell, and the plurality of uplink component carriers are distributed at different radio remote sites, determining both a downlink component carrier and an uplink component carrier by the terminal device during multi-connectivity link addition or switching helps correctly select a target multi-connectivity cell, and avoids mistakenly selecting a cell that cannot satisfy an uplink service.

Therefore, a cell that satisfies a requirement can be relatively accurately located under different service requirements, thereby improving system efficiency.

### BRIEF DESCRIPTION OF DRAWINGS

FIG. 1 is an example diagram of a system architecture to which an embodiment of this application is applied;
FIG. 2 is a schematic flowchart of a method for reporting cell information according to this application;
FIG. 3 is a schematic flowchart of another method for reporting cell information according to this application;
FIG. 4 is another example diagram of a system architecture to which an embodiment of this application is applied;
FIG. 5 is a schematic flowchart of another method for reporting cell information according to this application;
FIG. 6 is a schematic flowchart of another method for reporting cell information according to this application;
FIG. 7 is a schematic block diagram of an information processing apparatus according to an embodiment of this application;
FIG. 8 is a schematic diagram of a structure of a terminal device according to an embodiment of this application; and
FIG. 9 is a schematic diagram of a structure of a radio access network device according to an embodiment of this application.

### DESCRIPTION OF EMBODIMENTS

The following describes technical solutions of this application with reference to accompanying drawings.

The technical solutions in embodiments of this application may be applied to various communication systems, for example, a global system for mobile communication (Global System for Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th Generation, 5G) system, a new radio (New Radio, NR) communication system, a future mobile communication system, or the like.

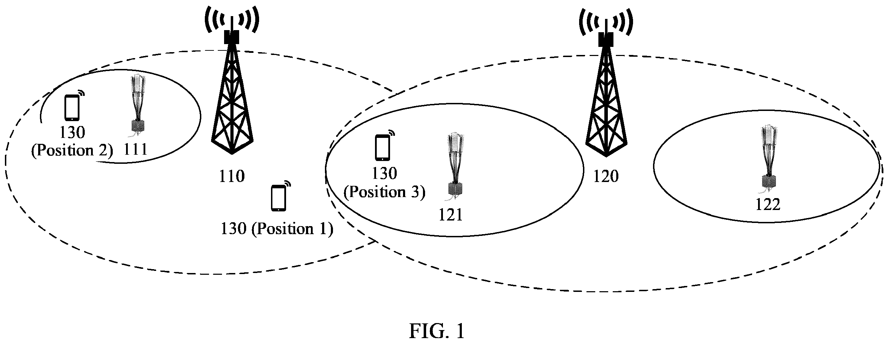

FIG. 1 shows a communication system 100 to which an embodiment of this application is applied. The communication system 100 may include at least one radio access network device (for example, a network device 110 and a network device 120) and at least one terminal device (where only one terminal device 130 is shown in the figure). The terminal device is connected to the radio access network device in a wireless manner, and the radio access network device is connected to a core network device in a wireless or wired manner. The core network device is not shown in FIG. 1. It should be understood that the core network device and the radio access network device may be different independent physical devices, or a function of the core network device and a logical function of the radio access network device may be integrated into a same physical device, or some functions of the core network device and some functions of the radio access network device may be integrated into one physical device. The terminal device may be located at a fixed position, or may be mobile. FIG. 1 is only a schematic diagram. The communication system may further include another network device, for example, may further include a wireless relay device and a wireless backhaul device, which are not shown in FIG. 1. Quantities of core network devices, radio access network devices, and terminal devices included in the mobile communication system are not limited in this embodiment of this application.

In the mobile communication system 100, the radio access network device 120 is an access device, in the mobile communication system, that is connected to the terminal device in a wireless manner. The radio access network device 120 may be a base station, an evolved NodeB (evolved NodeB, eNB), a home base station, an access point (access point, AP), a wireless relay node, a wireless backhaul node, a transmission point (transmission point, TP), or a transmission and reception point (transmission and reception point, TRP) in a wireless fidelity (wireless fidelity, Wi-Fi) system, or the like, or may be a network device in an LTE system or a gNB in an NR system, or may be a component or a part of device of a base station, for example, a central unit (central unit, CU), a distributed unit (distributed unit, DU), or a baseband unit (baseband unit, BBU), or may be a network device in a future communication system. It should be understood that a specific technology used by and a specific device form of a radio access network device are not limited in embodiments of this application. In this application, the radio access network device is referred to as a network device for short. Unless otherwise specified, in this application, all network devices are radio access network devices. The network device 110 and the network device 120 may be devices communicating with the terminal device. Each network device may provide communication coverage for a specific geographical area, and may communicate with a terminal device located in the coverage area (cell). In this application, the network device may be a network device itself, or may be a chip used in the network device to complete a wireless communication processing function. In this application, the network device may alternatively be any combination of the foregoing network devices.

In addition, in embodiments of this application, the access network device provides services for a cell, and the terminal device communicates with the access network device through a transmission resource (for example, a frequency domain resource or a spectrum resource) used by the cell. The cell may be a cell corresponding to the access network device (for example, a base station). The cell may belong to a macro base station, or may belong to a base station corresponding to a small cell (small cell). The small cell herein may include: a metro cell (metro cell), a micro cell (micro cell), a pico cell (pico cell), a femto cell (femto cell), and the like. These small cells have characteristics of small coverage and low transmit power, and are applicable to providing a high-speed data transmission service.

The terminal device 130 may communicate with one or more core networks (core network, CN) through access network device. The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function or another processing device connected to a wireless modem, a vehicle-mounted device, a wearable device, a terminal device in a 5G network, a terminal device in a future evolved public land mobile network (public land mobile network, PLMN), or the like. For example, the terminal device may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in unmanned driving, a wireless terminal in telemedicine, a wireless terminal in a smart grid, a wireless terminal in a smart city (smart city), a wireless terminal in a smart home (smart home), or the like. In this application, the terminal device and a chip that can be applied to the terminal device are collectively referred to as a terminal device. It should be understood that a specific technology used by and a specific device form of the terminal device are not limited in embodiments of this application.

As an example instead of a limitation, in embodiments of this application, the terminal device may alternatively be a wearable device. The wearable device may also be referred to as a wearable smart device, and is a general term of wearable devices that are intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. Generic wearable smart devices include full-featured and large-size devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In addition, in embodiments of this application, the terminal device may alternatively be a terminal device in an Internet of things (Internet of things, IoT) system. IoT is an important part of future development of information technologies. A main technical feature of the IoT is connecting things to a network by using a communication technology, to implement an intelligent network for human-machine interconnection and thing-thing interconnection.

The two network devices and the one terminal device in FIG. 1 are used as an example. The network device 110 and the network device 120 may be distributed base stations. For example, the network device 110 includes a radio remote unit (remote radio unit, RRU) 111, and the network device 120 includes two RRUs, which are 121 and 122 respectively. The network device may be a BBU, and an interface between the BBU and the RRU may be an optical fiber interface or a wireless interface. In addition, the network device 110 and the network device 120 may alternatively be base stations in a heterogeneous network. For example, the network device 110 includes one micro base station (or TRP) 111, and the network device 120 includes two micro base stations (or TRPs) 121 and 122. An interface between a micro base station (or TRP) and a base station may be an optical fiber interface or a wireless interface.

The interface may be an ideal backhaul (backhaul) link or a non-ideal backhaul link. When the interface is an optical fiber interface, signaling exchange may be performed through an X2 or Xn interface. When the interface is a wireless interface, signaling exchange may be performed through air interface signaling. In the following examples of this application, the X2 interface is used as an example, and may be extended to any case. The following uses a distributed base station as an example, but this application is not limited to the example.

Optionally, the communication system 100 may include a plurality of network devices, and a coverage area of each network device may include another quantity of terminal devices. This is not limited in embodiments of this application. Optionally, the wireless communication system 100 may further include other network entities such as a network controller or a mobility management entity. Embodiments of this application are not limited thereto.

In this application, switching is used as an example below, and may also be applied to multi-connectivity link addition or switching. The multi-connectivity may include a connectivity with two links (namely, a dual link) or a connectivity with more than two links. It should be understood that the following "handed over to" may be replaced with "multi-connected to", and details are not described one by one.

In the descriptions of embodiments of this application, an example in which the terminal device 130 is handed over from a source cell to a target cell is used for description. It should be understood that the source cell and the target cell herein may be two different cells of a same network device, or may be two cells in a same network. As shown in FIG. 1, in a source cell 110, the terminal device 130 may be switched from a position 1 to a position 2, to implement handover between different cells of the same network device 110; or may be handed over from the source cell 110 to a target cell 121, for example, switched from a position 1 to a position 3 in FIG. 1, to implement handover between different cells of different network devices. In the two handover scenarios, handover is performed on a cell basis. Whether the source cell and the target cell are located in a same network device is not limited in this application.

In the carrier aggregation (component aggregation, CA) technology, cells may be classified into a primary cell (primary cell, PCell) and a secondary cell (secondary cell, SCell). The PCell includes one uplink component carrier (uplink component carrier, UP CC) and one downlink component carrier (downlink component carrier, DL CC), and the uplink component carrier and the downlink component carrier in the PCell are located on a same frequency band. The SCell includes one uplink component carrier and one downlink component carrier, and the uplink component carrier and the downlink component carrier in the SCell are also located on a same frequency band. In the dual connectivity technology, in addition to the foregoing definitions, the secondary cell may be further classified into a primary secondary cell (primary SCell, PSCell) and a normal SCell. The PSCell and the normal SCell each include one uplink component carrier and one downlink component carrier, and the uplink component carrier and the downlink component carrier in each SCell are located on a same frequency band. In addition, currently, there is a supplementary uplink (supplementary UL, SUL) or super uplink (super UL, SUL) technology, and in the technology, a cell includes a normal downlink (normal DL, NDL), a normal uplink (normal UL, NUL), and an SUL. The NDL and the NUL are located on a same frequency band, the SUL is located on another frequency band, and the frequency band on which the SUL is located is lower than the frequency band on which the NDL and the NUL are located.

It can be learned that, in the technology, each cell has a downlink component carrier located on a same frequency band as an uplink component carrier in the cell or a downlink component carrier whose frequency band is higher than that of the uplink component carrier in the cell. Signal strength of the downlink component carrier may be used to deduce a channel state of the uplink component carrier. Therefore, when the target cell is selected, regardless of the technology, whether the cell is suitable for being a target cell may be determined based on signal strength of a downlink component carrier in the cell.

However, in the flexible spectrum access (flexible spectrum access, FSA) technology, a cell may include one downlink component carrier and a plurality of uplink component carriers, frequency bands on which the uplink component carriers are located may be different, and a frequency band on which a single uplink component carrier is located is not necessarily lower than or equal to a frequency band on which the downlink component carrier is located as in the foregoing technology, and may alternatively be higher than the frequency band on which the downlink component carrier is located.

For example, composition of the cell may be [B 1 DL, B0 ULB2 ULB3 UL/B4 UL]. To be specific, the cell includes a downlink component carrier on a frequency band B 1, an uplink component carrier on a frequency band B0, an uplink component carrier on a frequency band B2, an uplink component carrier on a frequency band B3, and an uplink component carrier on a frequency band B4. B0<B1<B2<B3<B4. In other words, frequencies respectively corresponding to B0, B1, B2, B3, and B4 increase sequentially.

In the FSA technology, cells may be classified into a cell that includes an uplink component carrier on a same frequency band as a downlink component carrier and a cell that does not include an uplink component carrier on a same frequency band as a downlink component carrier. The cell that does not include an uplink component carrier on a same frequency band as a downlink component carrier may be further classified into a cell that includes an uplink component carrier on a higher frequency band and a cell that includes an uplink component carrier on a lower frequency band. Capacity of the cell that includes an uplink component carrier on a lower frequency band is limited. However, for the cell that includes an uplink component carrier on a higher frequency band, a downlink component carrier whose frequency band is lower than that of the uplink component carrier in the cell is not suitable for deducing a channel state of the uplink component carrier. It can be learned that, for the FSA technology, it may not be accurately determined whether the cell is suitable for being a target cell only by relying on signal strength of the downlink component carrier. Therefore, how to obtain channel states of the uplink component carriers that are on the higher frequency bands than that of the included downlink component carrier is a problem currently faced. In addition, even for the cell that includes an uplink component carrier on a same frequency band as a downlink component carrier and the cell that includes an uplink component carrier on a lower frequency band, obtaining a channel state of the uplink component carrier helps more accurately determine whether the cell is suitable for being used as a target cell.

This application provides a method for reporting cell or component carrier information, so that cell quality can be determined relatively accurately by reporting the cell or component carrier information.

In this application, when at least one uplink component carrier in a first cell is located on a millimeter-wave band, any embodiment of this application is also applicable to a beam-based case. In this application, "based on" may also be understood as "according to". In this application, all operations used for network-side switching are also applicable to a multi-connectivity case between a terminal device and a network side. Processing performed by a single execution body shown in embodiments of this application may alternatively be divided to be performed by a plurality of execution bodies, and the execution bodies are logically and/or physically separated. For example, processing performed by a network device may be divided to be performed by at least one of a CU, a DU, and a radio unit (radio unit, RU). To facilitate understanding of embodiments of this application, terms used in this application are first briefly described.

A measurement reporting event includes events (Event) A1, A2, A3, A4, A5, A6, B 1, B2, B 1-NR, and B2-NR. The following describes the events one by one.

Event A1: When signal strength of a cell to which a serving base station belongs becomes better than a threshold, the event A1 is triggered.

Event A2: usually used to trigger a mobility process when a terminal device moves towards a cell edge.

Event A3: When an offset of a neighboring cell exceeds an offset of a specified cell (PCell or PSCell), the event A3 is triggered. The specified cell is a primary serving cell in a master cell group (master cell group, MCG) or a secondary cell group (secondary cell group, SCG).

Event A4: When a neighboring cell becomes better than a defined threshold, the event A4 is triggered.

Event A5: When a specified cell becomes worse than a threshold 1 and a neighboring cell becomes better than a threshold 2, the event A5 is triggered. The event A5 is a combination of the event A2 and the event A4.

Event A6: When an offset of a neighboring cell exceeds an offset of a secondary cell, the event A6 is triggered. The offset may be positive or negative.

Event B 1: A target cell in another radio access technology (radio access technology, RAT) is better than a specified threshold and can provide sufficient coverage.

Event B1-NR: A target cell in NR is better than a specified threshold and can provide sufficient coverage.

Event B2: When a primary serving cell becomes worse than a threshold 1 and a neighboring RAT cell becomes better than a threshold 2, the event B2 is triggered. This can be used to trigger an RAT mobility procedure when the primary serving cell becomes weak. Inter-system neighboring cell measurement ensures that a target cell provides sufficient coverage.

Event B2-NR: When a primary serving cell becomes worse than a threshold 1 and an NR cell becomes better than a threshold 2, the event B2-NR is triggered. This can be used to trigger an RAT mobility procedure when the primary serving cell becomes weak. Inter-system neighboring cell measurement ensures that a target cell provides sufficient coverage.

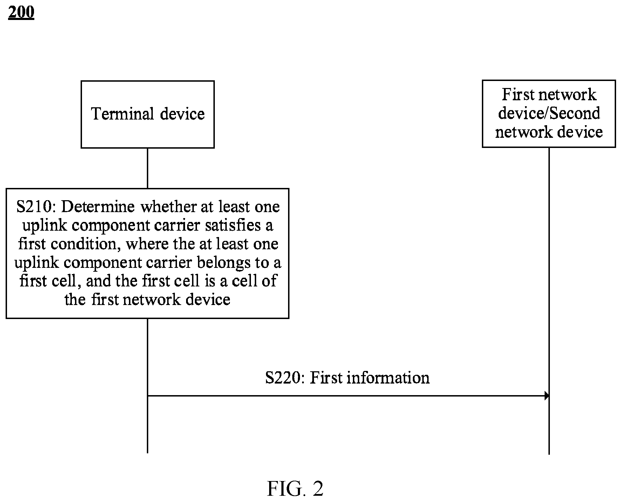

FIG. 2 is a schematic flowchart of a method for reporting cell or component carrier information according to an embodiment of this application. As shown in FIG. 2, the method relates to a terminal device and a network device. The network device includes a first network device and/or a second network device.

The first network device may be a neighboring base station, the second network device may be a serving base station, and the terminal device needs to be handed over from the serving base station to the neighboring base station. The neighboring base station may be referred to as a target base station, and the serving base station may be referred to as a source base station. In this case, the first network device includes at least one flexible cell, and the second network device may include a flexible cell, or may not include a flexible cell.

Alternatively, the first network device and the second network device may be same network devices. In other words, both the first network device and the second network device are serving base stations, and the terminal device is handed over from one cell of the serving base stations to another cell of the serving base stations. In this case, the first (second) network device includes at least one flexible cell.

Alternatively, the first network device and the second network device may be devices corresponding to multi-connectivity links of the terminal device. For example, the first network device is at least one small cell to which the second network device belongs within a coverage area of the second network device; or the first network device and the second network device are devices separately connected to a core network. That the first network device and the second network device are devices separately connected to a core network may be understood as follows: Both the first network device and the second network device may directly communicate with the core network. If the first network device and the second network device are not devices directly connected to the core network, the first network device and the second network device need to redirect received data to another base station through a backhaul link, to complete communication. That the first network device is the at least one small cell covered by the second network device may be understood as a case in which a backhaul link is required. However, that the first network device and the second network device are devices separately connected to a core network may be understood as that the first network device and the second network device are equal and have no affiliation relationship.

In this embodiment of this application, a flexible cell included in the first network device is referred to as a first cell. The flexible cell may be understood as including at least one uplink component carrier and a first downlink component carrier, and a frequency band corresponding to each uplink component carrier in the at least one uplink component carrier may be greater than, less than, or equal to a frequency band corresponding to the first downlink component carrier. The flexible cell may also be referred to as a new cell, an elastic cell, a cell with a variable quantity of component carriers, a cell with a variable quantity of uplink component carriers, or the like. The foregoing names are merely used as examples.

A cell other than a flexible cell is referred to as a non-flexible cell, and includes but is not limited to a carrier aggregation cell. The non-flexible cell may also be referred to as a common cell, a cell specified in an existing standard, a standard cell, or the like. The foregoing names are merely used as examples. Optionally, in addition to the flexible cell, the first network device may further include a non-flexible cell, and the second network device may also include a non-flexible cell.

In addition, a downlink component carrier associated with an uplink component carrier in the first cell is referred to as a second downlink component carrier. This association may be understood as that the second downlink component carrier may be used to deduce channel quality of the uplink component carrier. The second downlink component carrier may not belong to any cell, or may belong to another cell of the second network device, and the cell is referred to as a second cell. The second cell may not include the uplink component carrier. The manner in which the second uplink component carrier does not belong to any cell and the manner in which the second cell does not include the uplink component carrier may be applied to a scenario in which the second network device (a neighboring base station or a serving base station) has no carrier aggregation cell. In this case, the association relationship between the uplink component carrier and the second downlink component carrier may be obtained from the serving base station or the neighboring base station. Obtaining from the serving base station may be obtaining from a broadcast message or dedicated signaling. Obtaining from the target base station may be obtaining from a broadcast message. The second cell may alternatively be a carrier aggregation cell including the uplink component carrier. This manner may be applied to a scenario in which the second network device (a neighboring base station or a serving base station) has a carrier aggregation cell. In this scenario, the association relationship between the uplink component carrier and the second downlink component carrier may be obtained from the target base station, for example, from a secondary cell of the target base station. Certainly, the target base station may alternatively send the association relationship to the source base station through an interface between base stations, and the terminal device obtains the association relationship from the source base station. In the two scenarios, the second downlink component carrier and the uplink component carrier may belong to a same frequency band, or a frequency band on which the second downlink component carrier is located may be greater than a frequency band on which the uplink component carrier is located.

A specific method in FIG. 2 includes the following steps.

Step S210: The terminal device determines whether at least one uplink component carrier satisfies a first condition, where the at least one uplink component carrier belongs to the first cell. The first cell is a cell of the first network device.

In this step, that the terminal device determines whether at least one uplink component carrier satisfies a first condition may be understood as determining whether there is an uplink component carrier that satisfies the first condition in the first cell. For the description of the uplink component carrier that satisfies the first condition in the at least one uplink component carrier, step S210 may alternatively be expressed as follows: The terminal device determines that a first uplink component carrier satisfies the first condition, and the first uplink component carrier belongs to the first cell.

The terminal device determines that at least one downlink component carrier satisfies the first condition, and the first condition may be that signal strength of a downlink component carrier associated with the uplink component carrier is greater than or equal to a first threshold. In other words, signal strength of the second downlink component carrier is greater than or equal to the first threshold.

For example, the terminal device obtains the signal strength of the second downlink component carrier of the target base station. When the second downlink component carrier is greater than or equal to the first threshold, the second downlink component carrier may be a target component carrier, or it may be understood that an uplink component carrier associated with the second downlink component carrier is a target component carrier, and the first cell to which the uplink component carrier belongs is a target cell. That the terminal device obtains the signal strength of the second downlink component carrier of the target base station may be understood as that the terminal device detects a reference signal on the second downlink component carrier, and determines signal strength of the reference signal.

The first threshold may be specified in a protocol, configured by the serving base station, or configured by the target base station. When the first threshold is configured by the target base station, the first threshold may be sent by the target base station by using a broadcast message, and the terminal device obtains the first threshold from the broadcast message. This is not limited in this embodiment of this application.

In a possible implementation, the terminal device detects signal strength of a downlink component carrier associated with the at least one uplink component carrier, and may deduce channel state information of the at least one uplink component carrier, and determine whether the channel state information of the at least one uplink component carrier is greater than or equal to a second threshold. When channel state indication information of an uplink component carrier is greater than or equal to the second threshold, it may be determined that the uplink component carrier is a target component carrier, and the first cell to which the uplink component carrier belongs is the target cell.

The second threshold may be specified in a protocol, configured by the serving base station, or configured by the target base station. When the second threshold is configured by the target base station, the first threshold may be sent by the target base station by using a broadcast message, and the terminal device obtains the first threshold from the broadcast message. This is not limited in this embodiment of this application.

Channel state information of the first uplink component carrier includes at least one of the following items: reference signal received power, reference signal strength, a path loss, and channel state information. Alternatively, channel state information of the first uplink component carrier includes at least one of the following items: a reference signal received power range, a reference signal strength range, a path loss range, and a channel state information range.

It should be noted that the first threshold and the second threshold may be the same, or may be different. This is not limited in this embodiment of this application.

In a possible implementation, the terminal device determines that the at least one uplink component carrier satisfies the first condition, and the first condition may alternatively be that channel state indication information of the uplink component carrier is greater than or equal to the second threshold.

Optionally, the terminal device sends a random access signal on the at least one uplink component carrier. More specifically, the terminal device sends the random access signal to the first network device on the at least one uplink component carrier. The first network device receives the random signal, measures the channel state information of the at least one uplink component carrier, and sends a random access response (random access response, RAR) to the terminal device. The RAR includes the channel state information of the at least one uplink component carrier. The terminal device receives the channel state information of the at least one uplink component carrier. Optionally, the terminal device determines whether the channel state information of the at least one uplink component carrier is greater than or equal to the second threshold. When channel state indication information of an uplink component carrier is greater than or equal to the second threshold, it may be determined that the uplink component carrier is a target component carrier, and the first cell to which the uplink component carrier belongs is the target cell.

Optionally, the RAR includes the channel state information of the at least one uplink component carrier, and the channel state information of the at least one uplink component carrier is determined by the first network device. After receiving the random access signal, the second network device measures an information state of the at least one uplink component carrier. The first network device determines whether the channel state information of the at least one uplink component carrier is greater than or equal to the second threshold. When there is an uplink component carrier whose channel state indication information is greater than or equal to the second threshold, the first network device includes the channel state indication information of the uplink component carrier in the RAR.

Optionally, the terminal device sends a first signal on the at least one uplink component carrier. More specifically, the terminal device sends the first signal to the first network device and/or the second network device on the at least one uplink component carrier. After receiving the first signal, the first network device measures an information state of the at least one uplink component carrier, and sends the channel state information of the at least one uplink component carrier to the terminal device, or sends the channel state information of the at least one uplink component carrier to the second network device, and the second network device sends the channel state information of the at least one uplink component carrier to the terminal device. The terminal device receives the channel state information of the at least one uplink component carrier, and determines whether the channel state information of the at least one uplink component carrier is greater than or equal to the second threshold. When channel state indication information of an uplink component carrier is greater than or equal to the second threshold, it may be determined that the uplink component carrier is a target component carrier, and the first cell to which the uplink component carrier belongs is the target cell.

The first signal may be a sequence with a cyclic prefix (cyclic prefix, CP) in a front or a remote interference management (remote interference management, RIM) signal.

For example, the first signal may be at least one of a channel sounding reference signal (sounding reference signal, SRS), a channel state information reference signal (channel state information reference signal, CSI-RS), or a demodulation reference signal (demodulation reference signal, DMRS), or may be a newly defined signal. In an example, a resource carrying the first signal includes M orthogonal frequency division multiplexing (orthogonal frequency division multiplexing, OFDM) symbols in time domain, and all the symbols carry the same first signal. In addition, X CPs are added before (or at a most front end of) the M OFDM symbols, where M is a positive integer, and X≥1. In an example, the newly defined signal may be a RIM-like signal.

Step S220: The terminal device sends first information to the first network device or the second network device. To be specific, at least one of the following items is sent: signal strength of the first cell, an identifier of the first cell, signal strength of a downlink component carrier of the first cell, the channel state information of the uplink component carrier that satisfies the first condition in the at least one uplink component carrier, and an identifier of the uplink component carrier that satisfies the first condition in the at least one uplink component carrier.

Correspondingly, in step S220, the first network device or the second network device receives the first information, that is, receives at least one of the following items: the signal strength of the first cell, the identifier of the first cell, the signal strength of the downlink component carrier of the first cell, the channel state information of the uplink component carrier that satisfies the first condition in the at least one uplink component carrier, and the identifier of the uplink component carrier that satisfies the first condition in the at least one uplink component carrier.

If the first network device receives the first information, it is determined that the terminal device is handed over to the first network device. In other words, after the first network device received the first information, it is considered by default that the terminal device is handed over to the first cell.

If the second network device receives the first information, after receiving the first information, the second network device may determine, based on the first information, a specific cell to which the terminal device is to be handed over.

Specifically, in step S210, when there is an uplink component carrier that satisfies the first condition in the at least one uplink component carrier, the terminal device reports, to the first network device or the second network device, related information of the first cell or related information of the target cell or the target component carrier determined by the terminal device. The information is referred to as the first information for short below. The related information of the first cell may be at least one of the signal strength of the first cell, the identifier of the first cell, the signal strength of the downlink component carrier of the first cell, the channel state information of the uplink component carrier that satisfies the first condition in the at least one uplink component carrier, or the identifier of the uplink component carrier that satisfies the first condition in the at least one uplink component carrier.

The first information is sent to the first network device or the second network device, where the first information includes at least one of the following items: the signal strength of the first cell, the identifier of the first cell, the signal strength of the downlink component carrier of the first cell, channel state indication information of the first uplink component carrier, and an identifier of the first uplink component carrier. It may also be understood that the first information includes the following several cases.

Case 1: When there is an uplink component carrier that satisfies the first condition in the at least one uplink component carrier, the signal strength of the first cell is sent to the first network device or the second network device. The first cell includes the first uplink component carrier and the first downlink component carrier that satisfy the first condition.

When the first cell of the first network device has an uplink component carrier that satisfies the first condition, it indicates that the first cell may be used as a candidate handover cell or a candidate multi-connectivity cell. Therefore, reporting the signal strength of the first cell helps the network device side perform an effective handover or multi-connectivity operation. When the information is reported to the first network device, the first network device may be directly handed over or multi-connected to. When the information is reported to the second network device, the second network device initiates an operation of handing over or multi-connecting to the first network device.

Case 2: When there is an uplink component carrier that satisfies the first condition in the at least one uplink component carrier, the signal strength of the first cell and the identifier of the first cell are sent to the first network device or the second network device. The first cell includes the first uplink component carrier and the first downlink component carrier that satisfy the first condition.

When at least one cell that is of the first network device and that includes the first cell has an uplink component carrier that satisfies the first condition, it indicates that the at least one cell that includes the first cell may be used as a candidate handover cell or a candidate multi-connectivity cell. Therefore, reporting the signal strength of the first cell and the identifier of the first cell helps the network device side perform an effective handover or multi-connectivity operation. The network device side may perform selection based on the reported cell information, and determine a target cell for the handover or multi-connectivity operation. When the information is reported to the first network device, the first network device may be directly handed over or multi-connected to. When the information is reported to the second network device, the second network device initiates an operation of handing over or multi-connecting to the first network device.

Case 3: When there is an uplink component carrier that satisfies the first condition in the at least one uplink component carrier, the identifier of the first cell and channel state information of the uplink component carrier that satisfies the first condition in the at least one uplink component carrier are sent to the first network device or the second network device.

When at least one cell that is of the first network device and that includes the first cell has an uplink component carrier that satisfies the first condition, it indicates that the at least one cell that includes the first cell may be used as a candidate handover cell or a candidate multi-connectivity cell. Therefore, reporting the identifier of the first cell and the channel state information of the uplink component carrier that satisfies the first condition in the first cell helps the network device determine a best cell or a cell that can provide better uplink transmission service quality in a plurality of candidate target handover cells or candidate target multi-connectivity cells, and helps the network device side to perform an effective handover or multi-connectivity operation. The network device side may perform selection based on the reported cell information, and determine a target cell for the handover or multi-connectivity operation. When the information is reported to the first network device, the first network device may be directly handed over or multi-connected to. When the information is reported to the second network device, the second network device initiates an operation of handing over or multi-connecting to the first network device.

Case 4: When there is an uplink component carrier that satisfies the first condition in the at least one uplink component carrier, the signal strength of the first cell, the identifier of the first cell, and channel state information of the uplink component carrier that satisfies the first condition in the at least one uplink component carrier are sent to the first network device or the second network device.

When at least one cell that is of the first network device and that includes the first cell has an uplink component carrier that satisfies the first condition, it indicates that the at least one cell that includes the first cell may be used as a candidate handover cell or a candidate multi-connectivity cell. Therefore, reporting the identifier of the first cell and the channel state information of the uplink component carrier that satisfies the first condition in the first cell helps the network device determine a cell with best overall channel quality of a downlink component carrier and an uplink component carrier or a cell that can provide better downlink and uplink transmission service quality in a plurality of candidate target handover cells or candidate target multi-connectivity cells, and helps the network device side to perform an effective handover or multi-connectivity operation. The network device side may perform selection based on the reported cell information, and determine a target cell for the handover or multi-connectivity operation. When the information is reported to the first network device, the first network device may be directly handed over or multi-connected to. When the information is reported to the second network device, the second network device initiates an operation of handing over or multi-connecting to the first network device.

Case 5: When there is an uplink component carrier that satisfies the first condition in the at least one uplink component carrier, the identifier of the first cell, channel state information of the uplink component carrier that satisfies the first condition in the at least one uplink component carrier, and an identifier of the uplink component carrier that satisfies the first condition in the at least one uplink component carrier are sent to the first network device or the second network device.

When at least one cell that is of the first network device and that includes the first cell has an uplink component carrier that satisfies the first condition, it indicates that the at least one cell that includes the first cell may be used as a candidate handover cell or a candidate multi-connectivity cell. Therefore, reporting the identifier of the first cell and the channel state information of the uplink component carrier that satisfies the first condition in the first cell helps the network device determine a best cell or a cell that can provide better uplink transmission quality in a plurality of candidate target handover cells or candidate target multi-connectivity cells, and helps the network device side to perform an effective handover or multi-connectivity operation. In addition, when the effective handover or multi-connectivity operation is performed on the network device side, a best small site that can provide uplink transmission service quality can be determined, and therefore correct uplink access is performed. The network device side may perform selection based on the reported cell information, and determine a target cell for the handover or multi-connectivity operation. When the information is reported to the first network device, the first network device may be directly handed over or multi-connected to. When the information is reported to the second network device, the second network device initiates an operation of handing over or multi-connecting to the first network device.

Case 6: When there is an uplink component carrier that satisfies the first condition in the at least one uplink component carrier, the signal strength of the first cell, the identifier of the first cell, and channel state information of the uplink component carrier that satisfies the first condition in the at least one uplink component carrier are sent to the first network device or the second network device.

When at least one cell that is of the first network device and that includes the first cell has an uplink component carrier that satisfies the first condition, it indicates that the at least one cell that includes the first cell may be used as a candidate handover cell or a candidate multi-connectivity cell. Therefore, reporting the identifier of the first cell and the channel state information of the uplink component carrier that satisfies the first condition in the first cell helps the network device determine a cell with best overall channel quality of a downlink component carrier and an uplink component carrier or a cell that can provide better downlink and uplink transmission service quality in a plurality of candidate target handover cells or candidate target multi-connectivity cells, and helps the network device side to perform an effective handover or multi-connectivity operation. The network device side may perform selection based on the reported cell information, and determine a target cell for the handover or multi-connectivity operation. When the information is reported to the first network device, the first network device may be directly handed over or multi-connected to. When the information is reported to the second network device, the second network device initiates an operation of handing over or multi-connecting to the first network device.

Case 7: When there is an uplink component carrier that satisfies the first condition in the at least one uplink component carrier, the signal strength of the first cell, the identifier of the first cell, channel state information of the uplink component carrier that satisfies the first condition in the at least one uplink component carrier, and an identifier of the uplink component carrier that satisfies the first condition in the at least one uplink component carrier are sent to the first network device or the second network device.

When at least one cell that is of the first network device and that includes the first cell has an uplink component carrier that satisfies the first condition, it indicates that the at least one cell that includes the first cell may be used as a candidate handover cell or a candidate multi-connectivity cell. Therefore, reporting the identifier of the first cell and the channel state information of the uplink component carrier that satisfies the first condition in the first cell helps the network device determine a cell with best overall channel quality of a downlink component carrier and an uplink component carrier or a cell that can provide better downlink and uplink transmission service quality in a plurality of candidate target handover cells or candidate target multi-connectivity cells, and helps the network device side to perform an effective handover or multi-connectivity operation. In this way, when the effective handover or multi-connectivity operation is performed on the network device side, a target handover or multi-connectivity cell with better service quality of a downlink component carrier can be selected, and a best small site that can provide uplink transmission service quality can be determined, so that correct downlink and uplink access can be performed. The network device side may perform selection based on the reported cell information, and determine a target cell for the handover or multi-connectivity operation. When the information is reported to the first network device, the first network device may be directly handed over or multi-connected to. When the information is reported to the second network device, the second network device initiates an operation of handing over or multi-connecting to the first network device.

In any one of the cases, optionally, the downlink component carrier of the first cell is the first downlink component carrier. The first cell includes the first uplink component carrier and the first downlink component carrier that satisfy the first condition.

In any one of the cases, optionally, the signal strength of the first cell is the signal strength of the downlink component carrier of the first cell.

In any one of the cases, optionally, the signal strength of the first cell is an average value of the signal strength of the downlink component carrier of the first cell and signal strength of the first uplink component carrier that satisfies the first condition.

In any one of the cases, optionally, the signal strength of the first cell is smaller signal strength between the signal strength of the downlink component carrier of the first cell and signal strength of the first uplink component carrier that satisfies the first condition.

In any one of the cases, optionally, the channel state information of the uplink component carrier that satisfies the first condition in the at least one uplink component carrier may be smallest channel state information in channel state information of uplink component carriers that satisfy the first condition in the at least one uplink component carrier, or may be channel state information of an uplink component carrier that satisfies the first condition and that has smallest channel state information in the at least one uplink component carrier.

In any one of the cases, optionally, the channel state information of the uplink component carrier that satisfies the first condition in the at least one uplink component carrier may be average channel state information of channel state information of uplink component carriers that satisfy the first condition in the at least one uplink component carrier, or may be an average value of channel state information of all uplink component carriers that satisfy the first condition in the at least one uplink component carrier. Optionally, when the channel state information of the uplink component carrier that satisfies the first condition in the at least one uplink component carrier is the average value, information sent by the terminal device to the first network device or the second network device may carry a quantity of uplink component carriers that satisfy the first condition.

It should be understood that the described several cases included in the first information sent to the first network device or the second network device are merely examples for description, and this embodiment of this application is not limited thereto. For example, the first information sent to the first network device or the second network device may alternatively be any combination of the following items: the signal strength of the first cell, the identifier of the first cell, the signal strength of the downlink component carrier of the first cell, the channel state information of the uplink component carrier that satisfies the first condition in the at least one uplink component carrier, and the identifier of the uplink component carrier that satisfies the first condition in the at least one uplink component carrier. The first cell includes the first uplink component carrier and the first downlink component carrier that satisfy the first condition. A frequency band on which the first uplink component carrier that satisfies the first condition is located is different from a frequency band on which the first downlink component carrier is located, or a frequency on which the first uplink component carrier that satisfies the first condition is located is different from a frequency on which the first downlink component carrier is located. The frequency on which the first uplink component carrier that satisfies the first condition is located is higher than the frequency on which the first downlink component carrier is located. This is not limited in this embodiment of this application.

In the foregoing solutions, the terminal device determines the uplink component carrier based on whether the channel state information of the at least one uplink component carrier or the signal strength of the downlink component carrier associated with the at least one uplink component carrier satisfies the first condition, further determines the first cell that satisfies the first condition, and reports the related information of the first cell to the first network device or the second network device. During cell handover, when one downlink component carrier corresponds to a plurality of uplink component carriers in a same cell, and the plurality of uplink component carriers are distributed at different radio remote sites, determining both a downlink component carrier and an uplink component carrier by the terminal device during handover helps correctly select a target handover cell, and avoids mistakenly selecting a cell that cannot satisfy an uplink service. When multi-connectivity link addition or switching is performed in a cell, if one downlink component carrier corresponds to a plurality of uplink component carriers in a same cell, and the plurality of uplink component carriers are distributed at different radio remote sites, determining both a downlink component carrier and an uplink component carrier by the terminal device during multi-connectivity link addition or switching helps correctly select a target multi-connectivity cell, and avoids mistakenly selecting a cell that cannot satisfy an uplink service. A cell that satisfies a requirement can be relatively accurately located under different service requirements, thereby improving system efficiency.

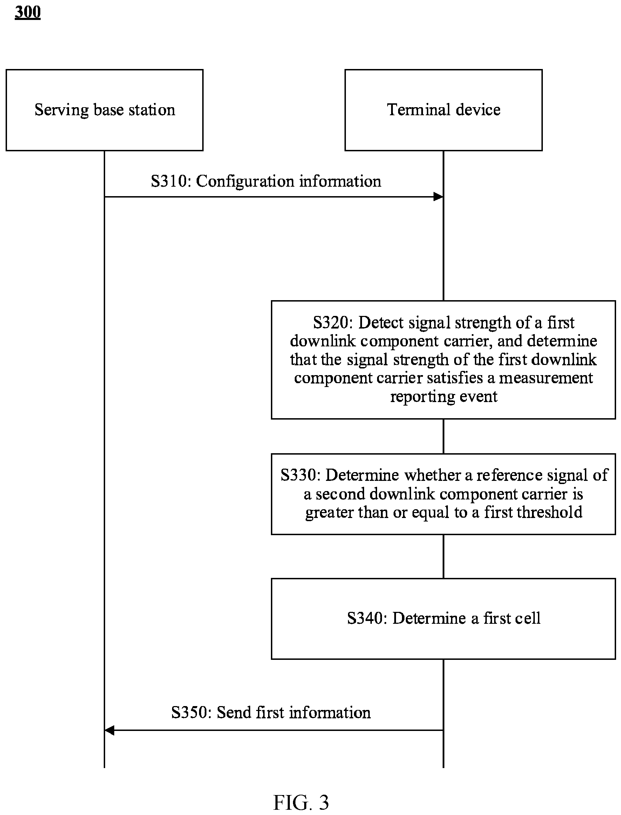

The following describes the method 200 in detail by using FIG. 3 to FIG. 6. The descriptions of the terms and the like in the method 200 are also applicable to methods shown in FIG. 3 to FIG. 6.

FIG. 3 is a schematic flowchart of a method for reporting cell information according to an embodiment of this application. In FIG. 3, the method in FIG. 2 is described in detail by using an example in which the first network device is a neighboring base station (not shown) and the second network device is a serving base station. The serving base station may include a flexible cell, or may not include a flexible cell. The neighboring base station includes at least one flexible cell.

It should be understood that the flexible cell may include a downlink component carrier and at least one uplink component carrier. A frequency of a frequency band on which the uplink component carrier is located may be greater than or equal to a frequency of a frequency band on which the downlink component carrier is located.

In the following embodiments of this application, an example in which the terminal device is handed over from a cell in which the terminal device is currently located to any cell of the neighboring base station is used for description. As shown in FIG. 3, the method 300 may include step S310 to step S350. Step S330 and step S350 may be used to explain step S210 and step S220. The following describes the steps in the method 300 in detail.

S310: The serving base station sends configuration information to the terminal device.

Specifically, the configuration information may be at least one of a to-be-measured cell in the neighboring base station and a reference signal configuration. The configuration information is information transmitted by the serving base station and the neighboring base station through an interface. In this application, information may be transferred between the serving base station and the neighboring base station by using an existing X2/Xn interface message, or may be transferred by using another X2/Xn interface message, for example, a dedicated message. This is not limited in this application.

If a cell in the neighboring base station is a flexible cell, the configuration information further includes association configuration information.

The association configuration information includes first association configuration information, that is, includes an association relationship between an uplink component carrier of the flexible cell and the second downlink component carrier. In an embodiment, in addition to the flexible cell, the neighboring base station further has the association relationship between the uplink component carrier of the flexible cell and the second downlink component carrier. The second downlink component carrier may belong to another cell, or may not belong to any cell. The another cell may be a flexible cell or a cell in existing carrier aggregation or dual connectivity. For example, the first association configuration information includes at least one of an association relationship between a DCC 1 and a UCC 0, an association relationship between a DCC 2 and a UCC 2, an association relationship between a DCC 3 and a UCC 3, and an association relationship between a DCC 4 and a UCC 4. In another embodiment, in addition to the flexible cell, the neighboring base station further has another cell (referred to as a second cell below), and the second cell includes a second downlink component carrier and an uplink component carrier. In other words, the first association configuration information is an association relationship between the second downlink component carrier of the second cell and the uplink component carrier of the second cell.

The association configuration information further includes second association configuration information, namely, an association relationship between the downlink component carrier and the uplink component carrier of the flexible cell. In other words, the flexible cell includes the first downlink component carrier and the at least one uplink component carrier. The second association configuration information is an association relationship between the first downlink component carrier of the flexible cell and the at least one uplink component carrier of the flexible cell. The second association configuration information includes an association relationship between a DCC 1 and each of a UCC 2 and a UCC 3 and an association relationship between a DCC 5 and each of a UCC 0 and a UCC 4.

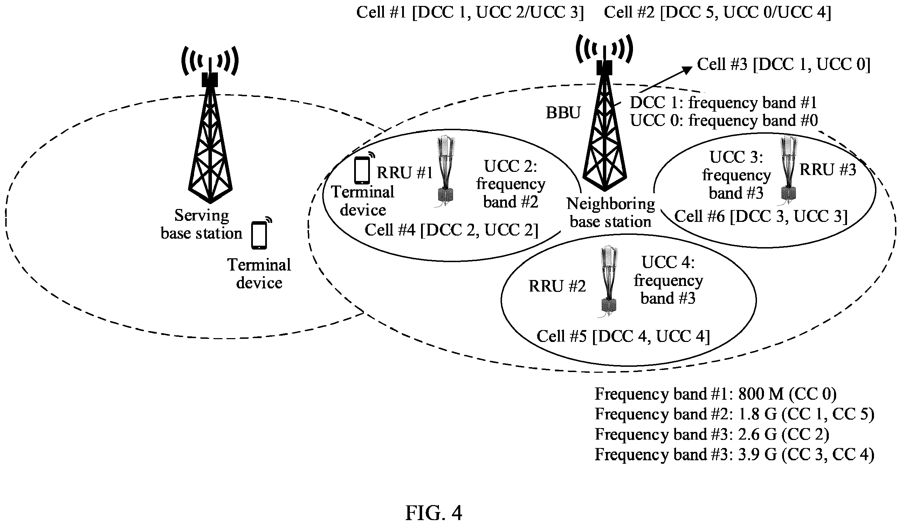

For example, as shown in FIG. 4, the neighboring base station includes six cells, where a cell #1 and a cell #2 are flexible cells, and a cell #3 to a cell #6 are other cells than the flexible cells. The cell #1 [DCC 1, UCC 2/UCC 3] indicates that the cell #1 includes one downlink component carrier DCC 1 and two uplink component carriers UCC 2 and UCC 3, the cell #2 [DCC 5, UCC 0/UCC 4] indicates that the cell #2 includes one downlink component carrier DCC 5 and two uplink component carriers UCC 0 and UCC 4, the cell #3 [DCC 1, UCC 0] indicates that the cell #3 includes one downlink component carrier DCC 1 and one uplink component carrier UCC 0, the cell #4 [DCC 2, UCC 2] indicates that the cell #4 includes one downlink component carrier DCC 2 and one uplink component carrier UCC 2, the cell #5 [DCC 4, UCC 4] indicates that the cell #5 includes one downlink component carrier DCC 4 and one uplink component carrier UCC 4, and the cell #6 [DCC 3, UCC 3] indicates that the cell #6 includes one downlink component carrier DCC 3 and one uplink component carrier UCC 3. The cell #1 to the cell #5 are merely used as examples. [DCC 1, UCC 2/UCC 3] may alternatively be used only as an association relationship, and is not limited to being configured as the cell #1. Similarly, any one of [DCC 5, UCC 0/UCC 4], [DCC 1, UCC 0], [DCC 2, UCC 2], [DCC 4, UCC 4], and [DCC 3, UCC 3] may alternatively be used only as an association relationship, and is not limited to being configured as cells in the cells #2 to #5. The first association configuration information is at least one of an association relationship between the DCC 1 and the UCC 0, an association relationship between the DCC 2 and the UCC 2, an association relationship between the DCC 3 and the UCC 3, and an association relationship between the DCC 4 and the UCC 4. The second association configuration information is an association relationship between the DCC 1 and each of the UCC 2 and the UCC 3 in the cell #1 and an association relationship between the DCC 5 and each of the UCC 0 and the UCC 4 in the cell #2.

It should be understood that, for ease of understanding only, the foregoing lists a quantity of cells of the serving base station and an association relationship between uplink and downlink component carriers of each cell. However, this should not constitute any limitation on this application. A correspondence between the quantity of cells of the serving base station and the association relationship between uplink and downlink component carriers of each cell is not limited in this application.

S320: The terminal device detects signal strength of the first downlink component carrier, and determines that the signal strength of the first downlink component carrier satisfies a measurement reporting event.

The neighboring base station sends a reference signal, namely, a reference signal of the first downlink component carrier, to the terminal device on the first downlink component carrier. The first downlink component carrier is a downlink component carrier in a flexible cell, for example, the DCC 1 and the DCC 5 in FIG. 4.

Specifically, after receiving the reference signal on the first downlink component carrier, the terminal device may detect the signal strength of the first downlink component carrier based on the reference signal, and the terminal device determines whether the signal strength of the first downlink component carrier satisfies the measurement reporting event. The measurement reporting event includes at least one of events A1, A2, A3, A4, A5, A6, B1, B2, B 1-NR and B2-NR. Alternatively, the terminal device determines whether the signal strength of the first downlink component carrier is greater than or equal to a third threshold. The third threshold may be determined by the serving base station or the neighboring base station. When determining that the signal strength of the first downlink component carrier satisfies the measurement reporting event, the terminal device may determine the flexible cell in which the first downlink component carrier is located as a first candidate cell.

In this application, the neighboring base station may also be referred to as a target base station.

In this application, that the terminal device determines whether the signal strength of the first downlink component carrier satisfies the measurement reporting event may be replaced with that the terminal device determines whether the signal strength of the first downlink component carrier satisfies a second condition. The second condition includes: The signal strength of the first downlink component carrier is greater than or equal to the third threshold. Similarly, that the terminal device determines whether the signal strength of the first downlink component carrier satisfies the measurement reporting event may alternatively be understood as that the terminal device determines that the signal strength of the first downlink component carrier satisfies the measurement reporting event, and that the terminal device determines whether the signal strength of the first downlink component carrier satisfies the second condition may alternatively be understood as that the terminal device determines that the signal strength of the first downlink component carrier satisfies the second condition.

The measurement reporting event A3 and the signal strength of the first downlink component carrier being RSRP are used as examples for description. As shown in FIG. 4, the first downlink component carrier includes the DCC 1 and the DCC 5. The terminal device detects that signal strength of the DCC 1 is RSRP #1, and detects that signal strength of the DCC 5 is RSRP #2. If both the RSRP #1 and the RSRP #2 satisfy the measurement reporting event A3, the terminal device may determine that the cell #1 and the cell #2 are first candidate cells.

It should be noted that there is no strict sequence relationship between step S310 and step S320. To be specific, S320 may be performed before S310, or S320 may be performed after S310, or S310 and S320 are performed at the same time. A sequence of the two steps is not limited in this embodiment of this application.

S330: The terminal device determines whether a reference signal of a second downlink component carrier satisfies the first threshold.

The neighboring base station sends a reference signal, namely, the reference signal of the second downlink component carrier, to the terminal device on the second downlink component carrier.

For example, the reference signal on the second downlink component carrier may be sent by an RRU and a BBU of the neighboring base station to the terminal device. As shown in FIG. 4, the neighboring base station includes the BBU and at least one RRU (three RRUs, namely, an RRU #1, an RRU #2, and an RRU #3 shown in the figure). A reference signal on the DCC 1 is sent by the BBU of the neighboring base station to the terminal device, a reference signal on the DCC 2 is sent by the RRU #1 of the neighboring base station to the terminal device, a reference signal on the DCC 4 is sent by the RRU #2 of the neighboring base station to the terminal device, and a reference signal on the DCC 3 is sent by the RRU #3 of the neighboring base station to the terminal device.

S340: The terminal device determines the first cell, where the first cell is a cell including an uplink component carrier associated with a second downlink component carrier whose signal strength satisfies the first threshold and a first downlink component carrier. Alternatively, the terminal device may not determine the first cell, and determine only the uplink component carrier associated with the second downlink component carrier whose signal strength satisfies the first threshold and/or the first downlink component carrier as a component carrier that needs to be reported.

Specifically, when detecting that the signal strength of the first downlink component carrier satisfies the measurement reporting event, and determining the first candidate cell, the terminal device may determine the target cell (the first cell) by using an uplink component carrier in the first candidate cell.

In a possible implementation, the terminal device may determine the first cell by detecting the reference signal of the second downlink component carrier. To be specific, when the reference signal of the second downlink component carrier is greater than or equal to the first threshold, the terminal device may determine, as the first cell, a flexible cell to which an uplink component carrier associated with the second downlink component carrier belongs.

For example, in step S320, the terminal device determines that the signal strength corresponding to the DCC 1 and the signal strength corresponding to the DCC 5 satisfy the measurement reporting event. The terminal device may determine, by using the second association configuration information, that the DCC 1 is associated with the UCC 2 and the UCC 3, and the DCC 5 is associated with the UCC 0 and the UCC 4; and may determine, by using the first association configuration information, that the UCC 2 is associated with the DCC 2, the UCC 3 is associated with the DCC 3, the UCC 0 is associated with the DCC 1, and the UCC 4 is associated with the DCC 4. The terminal device detects signal strength based on reference signals on the DCC 2, the DCC 3, the DCC 1, and the DCC 4, and further compares signal strength corresponding to each second downlink component carrier with the first threshold. For example, the reference signal strength is RSRP, and the first threshold is a. Reference signal strength of the DCC 1 is RSRP #1, reference signal strength of the DCC 2 is RSRP #2, reference signal strength of the DCC 3 is RSRP #3, and reference signal strength of the DCC 4 is RSRP #4. If the RSRP #2 is greater than a, and the RSRP #1, the RSRP #3, and the RSRP #4 are all less than a, the terminal device may determine that the UCC 2 associated with the DCC 2 is an uplink component carrier (the first uplink component carrier) on which service transmission needs to be performed. Further, the terminal device may determine a flexible cell in which the UCC 2 associated with the DCC 2 is located as the first cell. In other words, the cell #1 is the first cell.

In another possible implementation, the terminal device may deduce, by detecting the reference signal of the second downlink component carrier, channel state information of an uplink component carrier associated with the second downlink component carrier, and determine the first cell based on the channel state information of the uplink component carrier. In other words, when the channel state information of the uplink component carrier is greater than or equal to the second threshold, the terminal device may determine that a flexible cell to which the uplink component carrier belongs is the first cell.

For example, in step S320, the terminal device determines that the signal strength corresponding to the DCC 1 and the signal strength corresponding to the DCC 5 satisfy the measurement reporting event. The terminal device may determine, by using the second association configuration information, that the DCC 1 is associated with the UCC 2 and the UCC 3, and the DCC 5 is associated with the UCC 0 and the UCC 4; and may determine, by using the first association configuration information, that the UCC 2 is associated with the DCC 2, the UCC 3 is associated with the DCC 3, the UCC 0 is associated with the DCC 1, and the UCC 4 is associated with the DCC 4. The terminal device detects reference signal strength based on reference signals on the DCC 2, the DCC 3, the DCC 1, and the DCC 4, further deduces the channel state information of the uplink component carrier associated with the second downlink component carrier, and compares the channel state information of the uplink component carrier with the second threshold. For example, the reference signal strength of the second downlink component carrier is RSRP, the channel state information of the uplink component carrier is RSRP, and the second threshold is b. If reference signal strength of the DCC 1 is RSRP #1, it may be deduced that channel state information of the UCC 0 associated with the DCC 1 is RSRP#A. If reference signal strength of the DCC 2 is RSRP #2, it may be deduced that channel state information of the UCC 2 associated with the DCC 2 is RSRP #B. If reference signal strength of the DCC 3 is RSRP #3, it may be deduced that channel state information of the UCC 3 associated with the DCC 3 is RSRP #B. If reference signal strength of the DCC 4 is RSRP #4, it may be deduced that channel state information of the UCC 4 associated with the DCC 4 is RSRP #D. If the RSRP #B is greater than b, and the RSRP #A, the RSRP #C, and the RSRP #D are all less than b, the terminal device may determine that the UCC 2 is an uplink component carrier (the first uplink component carrier) on which service transmission needs to be performed. Further, the terminal device may determine a flexible cell in which the UCC 2 associated with the DCC 2 is located as the first cell. In other words, the cell #1 is the first cell.

Optionally, the first threshold may be configured by the network device. For example, the first threshold may be configured by the serving base station by using signaling, and the signaling includes but is not limited to RRC signaling. For another example, the first threshold may be configured by the neighboring base station by using a broadcast message, and the broadcast message includes but is not limited to a broadcast message sent by a secondary information block (secondary information block, SIB).

Optionally, the second threshold may be configured by the network device. For example, the first threshold may be configured by the serving base station by using signaling, and the signaling includes but is not limited to RRC signaling. For another example, the first threshold may be configured by the neighboring base station by using a broadcast message, and the broadcast message includes but is not limited to a broadcast message sent by a SIB.

S350: The terminal device sends the first information to the serving base station.

Specifically, after determining the first cell, the terminal device sends the related information of the first cell to the serving base station. In other words, the terminal device sends the first information to the serving base station. Alternatively, after determining the first cell, the terminal device sends the related information of the first cell to the neighboring base station. In other words, the terminal device sends the first information to the neighboring base station. The related information of the first cell includes at least one of the signal strength of the first cell, the identifier of the first cell, the identifier of the first uplink component carrier, the signal strength of the first downlink component carrier, or the channel state information of the first uplink component carrier.

The signal strength of the first cell may be average signal strength of the first cell, minimum signal strength of the first cell, maximum signal strength of the first cell, or the like.

Optionally, the related information of the first cell may further include a quantity of first uplink component carriers.

For example, in step S340, the cell #1 is determined as the first cell. In this case, the first information sent by the terminal device to the serving base station may be at least one of an identifier of the cell #1, an average value of signal strength of the DCC 1 in the cell #1, signal strength of the UCC 2, and signal strength of the UCC 3, an identifier of the UCC #2 in the cell #1, the signal strength of the DCC 1 in the cell #1, and channel state indication information of the UCC 2 in the cell #1.

During cell handover, when one downlink component carrier corresponds to a plurality of uplink component carriers in a same cell, and the plurality of uplink component carriers are distributed at different radio remote sites, determining both a downlink component carrier and an uplink component carrier by the terminal device during handover helps correctly select a target handover cell, and avoids mistakenly selecting a cell that cannot satisfy an uplink service. This is mainly considered for a case in which frequencies of uplink component carriers are high and the uplink frequencies are distributed in different RRHs.

For example, even if the RSRP of the DCC 1 in the cell #1[DCC 1, UCC 2/LTCC 3] is higher than the RSRP of the DCC 5 in the cell #2[DCC 5, UCC 0/UCC 4], if an uplink coverage performance requirement cannot be satisfied with reference to the UCC 2/LTCC 3, and the UCC 0/LTCC 4 can satisfy the uplink coverage performance requirement, the cell #2 may be preferentially selected as a reported handover candidate target cell.

In this embodiment of this application, cell or component carrier information is reported, so that cell quality can be relatively accurately determined. Further, accuracy of determining the cell quality is improved, so that the terminal device can be handed over to a cell that better satisfies a requirement, and a probability that the terminal device needs to be handed over again because the terminal device is handed over to an inappropriate cell is reduced. In this way, overheads and a delay that are generated accordingly are avoided. In addition, whether the first downlink component carrier satisfies the measurement reporting event may be first determined. When the first downlink component carrier satisfies the measurement reporting event, the first uplink component carrier is determined from all uplink component carriers associated with the first downlink component carrier. In other words, it is determined whether a second downlink component carrier of another cell associated with the uplink component carrier is greater than or equal to the first threshold, so as to determine the first uplink component carrier. Further, the cell in which the first uplink component carrier is located is determined as the first cell. In short, the target handover cell is determined based on the signal strength of the first downlink component carrier and the reference signal strength of the second downlink component carrier, so that a cell that satisfies a requirement can be relatively accurately handed over to, and signaling overheads and a delay are reduced in a component carrier measurement process.

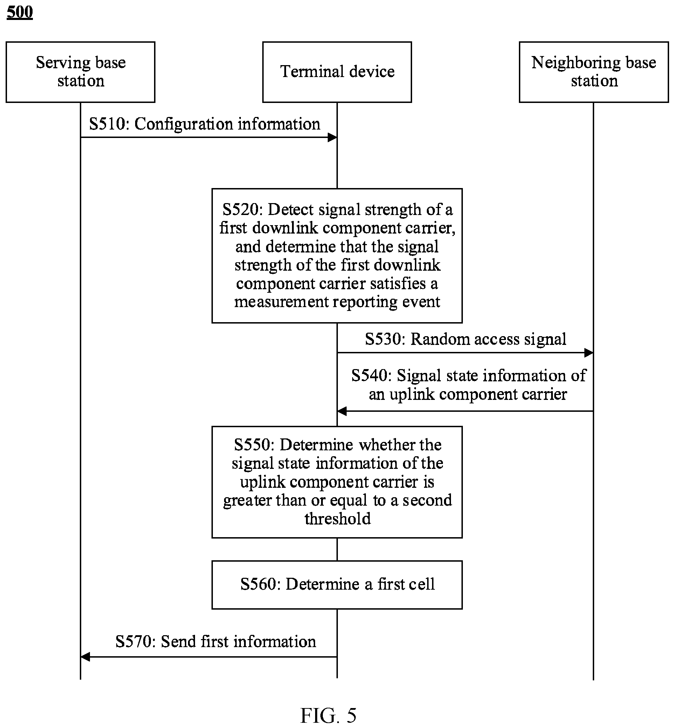

FIG. 5 is a schematic flowchart of a method for reporting cell information according to an embodiment of this application. In FIG. 5, the method in FIG. 2 is described in detail by using an example in which the first network device is a neighboring base station and the second network device is a serving base station. The serving base station may include a flexible cell, or may not include a flexible cell. The neighboring base station includes at least one flexible cell. In the following embodiments of this application, an example in which the terminal device is handed over from a cell in which the terminal device is currently located to any cell of the neighboring base station is used for description. As shown in FIG. 5, the method 500 may include step S510 to step S570. Step S550 and step S570 may be used to explain step S210 and step S220. The following describes the steps in the method 500 in detail.

S510: The serving base station sends configuration information to the terminal device.

Specifically, the configuration information may be at least one of a to-be-measured cell in the neighboring base station and a reference signal configuration. The configuration information is information transmitted by the serving base station and the neighboring base station through an interface. In this application, information may be transferred between the serving base station and the neighboring base station by using an existing X2/Xn interface message, or may be transferred by using another X2/Xn interface message, for example, a dedicated message. This is not limited in this application.

If a cell in the neighboring base station is a flexible cell, the configuration information further includes random access resource information. The random access resource information may be random access resource information corresponding to each uplink component carrier in the flexible cell, or may be random access resource information corresponding to an uplink component carrier whose frequency is higher than that of the first downlink component carrier in the flexible cell. For example, as shown in FIG. 4, the random access resource information may be random access resource information corresponding to an uplink component carrier. For example, a cell #1 and a cell #2 are flexible cells, and the random access resource information includes random access resource information of a UCC 2, random access resource information of a UCC 3, random access resource information of a UCC 4, and random access resource information of a UCC 0. The random access resource information may be the random access resource information corresponding to an uplink component carrier whose frequency is higher than that of the first downlink component carrier in the flexible cell. For example, in the cell #1, a frequency corresponding to a DCC 1 is 1.8 G, and uplink component carriers whose frequencies are higher than that of the DCC 1 include the UCC 2 whose frequency is 2.6 G and the UCC 3 whose frequency is 3.9 G. If a frequency corresponding to a DCC 5 in the cell #2 is 1.8 G, and an uplink component carrier whose frequency is higher than the frequency corresponding to the DCC 5 is the UCC 4 whose frequency is 3.9 G, the random access resource information includes the random access resource information of the UCC 2, the random access resource information of the UCC 3, and the random access resource information of the UCC 4.

It should be understood that, for ease of understanding only, the foregoing lists a quantity of cells of the serving base station and frequencies of uplink and downlink component carriers of each cell. However, this should not constitute any limitation on this application. The quantity of cells of the serving base station and the frequencies of uplink and downlink component carriers of each cell are not limited in this application.

S520: The terminal device detects signal strength of the first downlink component carrier, and determines that the signal strength of the first downlink component carrier satisfies a measurement reporting event.

For a specific implementation thereof, refer to S320. Herein, to avoid repetition, detailed descriptions are omitted.

S530: The terminal device sends a random access signal to the neighboring base station.

Specifically, in step S520, after it is determined that the signal strength of the first downlink component carrier satisfies the measurement reporting event, an uplink component carrier whose frequency is higher than the frequency corresponding to the first downlink component carrier is determined, to send the random access signal to the neighboring base station on the uplink component carrier. More specifically, the random access signal is sent to an RRU of the neighboring base station on the uplink component carrier, where the random access signal includes but is not limited to a preamble.

For example, in step S520 or step S320, downlink component carriers that satisfy a measurement reporting condition include the DCC 1 and the DCC 5, uplink component carriers whose frequencies are higher than that of the DCC 1 in the same cell include the UCC 2 and the UCC 3, and an uplink component carrier whose frequency is higher than that of the DCC 5 in the same cell is the UCC 4. In this case, the terminal device sends the random access signal to an RRU #1 on the uplink component carrier UCC 2, sends the random access signal to an RRU #3 on the uplink component carrier UCC 3, and sends the random access signal to an RRU #2 on the uplink component carrier UCC 4.

S540: The neighboring base station sends channel state information of the uplink component carrier to the terminal device.

Specifically, after receiving the random access signal on the at least one uplink component carrier, the neighboring base station detects the random access signal to obtain the channel state information of the uplink component carrier, and sends the channel state information of the uplink component carrier to the terminal device. More specifically, the neighboring base station sends an RAR to the terminal device, where the RAR includes the channel state information of the uplink component carrier, and the random access response message is used to respond to the random access signal.

Optionally, the channel state information includes at least one of RSRP, reference signal strength, a path loss, and channel state information (channel state information reference signal, CSI).

Optionally, the channel state information further includes at least one of an RSRP range, a reference signal strength range, a path loss range, and a CSI range.

Optionally, the channel state indication information may further include an identifier of the uplink component carrier.

Optionally, after it is determined that the signal strength of the first downlink component carrier satisfies the measurement reporting event, that the uplink component carrier whose frequency is higher than the frequency corresponding to the first downlink component carrier is determined, to send the random access signal to the neighboring base station on the uplink component carrier may alternatively be sending in a polling manner from a component carrier on a lowest frequency band. Polling is performed until at least one uplink component carrier that can satisfy the first condition is obtained. The polling may be understood as follows: During random access channel (random access channel, RACH) polling, for a plurality of uplink component carriers in a cell, RACH transmission is performed from an uplink component carrier with a lowest frequency in the plurality of uplink component carriers. In other words, transmission is performed sequentially from the uplink component carrier with the lowest frequency in the plurality of uplink component carriers to an uplink component carrier with a highest frequency in the plurality of uplink component carriers.

Optionally, in the polling process, sending power may be further set. The sending power may be set based on a preset power value that satisfies a receive threshold of the first network device (for example, a BBU) and a path loss of a downlink component carrier in the first network device, so as to minimize overheads and a delay caused by unnecessary ramping (ramping).

That the terminal device receives the channel state information of the uplink component carrier may be understood as follows: When the channel state information is signal strength, if first transmission is not detected by the base station, existing ramping may be followed, but signal strength of all uplink component carriers needs to be fed back, and overheads are high. When the channel state information is a determined activated component carrier that satisfies the first condition, if first transmission is not detected by the base station, existing ramping cannot be followed. Unless the base station can learn the transmit power of the terminal device in various explicit or implicit manners, the base station cannot determine the activated component carrier.

S550: The terminal device determines whether the channel state information of the uplink component carrier is greater than or equal to the second threshold.

S560: The terminal device determines the first cell, where the first cell is a cell including an uplink component carrier whose channel state information is greater than or equal to the second threshold and the first downlink component carrier; or the terminal device may not determine the first cell, and determine only an uplink component carrier whose channel state information is greater than or equal to the second threshold and/or the first downlink component carrier as a component carrier that needs to be reported.

Specifically, after detecting that the signal strength of the first downlink component carrier satisfies the measurement reporting event, the terminal device may determine the first cell by determining the uplink component carrier. In other words, the terminal device receives the channel state information of the uplink component carrier, and the terminal device directly or indirectly determines the first uplink component carrier based on the channel state information.

Optionally, when the channel state information is signal strength, the terminal device determines whether channel state indication information of the uplink component carrier is greater than or equal to the second threshold. When the channel state indication information of the uplink component carrier is greater than or equal to the second threshold, the uplink component carrier is determined as the first uplink component carrier, and then the flexible cell in which the first uplink component carrier is located is determined as the first cell.

Optionally, when the channel state indication information is an identifier of the uplink component carrier, the terminal device may directly determine the uplink component carrier as the first uplink component carrier. The terminal device further determines the flexible cell in which the first uplink component carrier is located as the first cell.

For example, in step S520, the terminal device determines that the signal strength corresponding to the DCC 1 and the signal strength corresponding to the DCC 5 satisfy the measurement reporting event, and the terminal device sends the random access signal to the RRU #1 on the uplink component carrier UCC 2, sends the random access signal to the RRU #3 on the uplink component carrier UCC 3, and sends the random access signal to the RRU #2 on the uplink component carrier UCC 4. An example in which the channel state information is RSRP and the second threshold is b is used for description. The terminal device receives channel state information RSRP #B corresponding to the UCC 2, channel state information RSRP #C corresponding to the UCC 3, and channel state information RSRP #D corresponding to the UCC 4. If the RSRP #B is greater than b, and both the RSRP #C and the RSRP #D are less than b, the terminal device may determine that the UCC 2 is an uplink component carrier (the first uplink component carrier) on which service transmission needs to be performed. Further, the terminal device may determine a flexible cell in which the UCC 2 is located as the first cell. In other words, the cell #1 is the first cell.

Optionally, the second threshold may be configured by the network device. For example, the first threshold may be configured by the serving base station by using signaling, and the signaling includes but is not limited to RRC signaling. For another example, the first threshold may be configured by the neighboring base station by using a broadcast message, and the broadcast message includes but is not limited to a broadcast message sent by a SIB.

S570: The terminal device sends the first information to the serving base station.

For a specific implementation thereof, refer to S350. Herein, to avoid repetition, detailed descriptions are omitted.

In the solution, whether the first downlink component carrier satisfies the measurement reporting event is first determined, and when the first downlink component carrier satisfies the measurement reporting event, it is determined whether the channel state information corresponding to the uplink component carrier is greater than or equal to the second threshold, so as to determine the first uplink component carrier. Further, the cell in which the first uplink component carrier is located is determined as the first cell. In short, the target handover cell is determined based on the signal strength of the first downlink component carrier and the channel state information of the at least one uplink component carrier, so that a cell that satisfies a requirement can be relatively accurately handed over to, and signaling overheads and a delay are reduced in a component carrier measurement process.

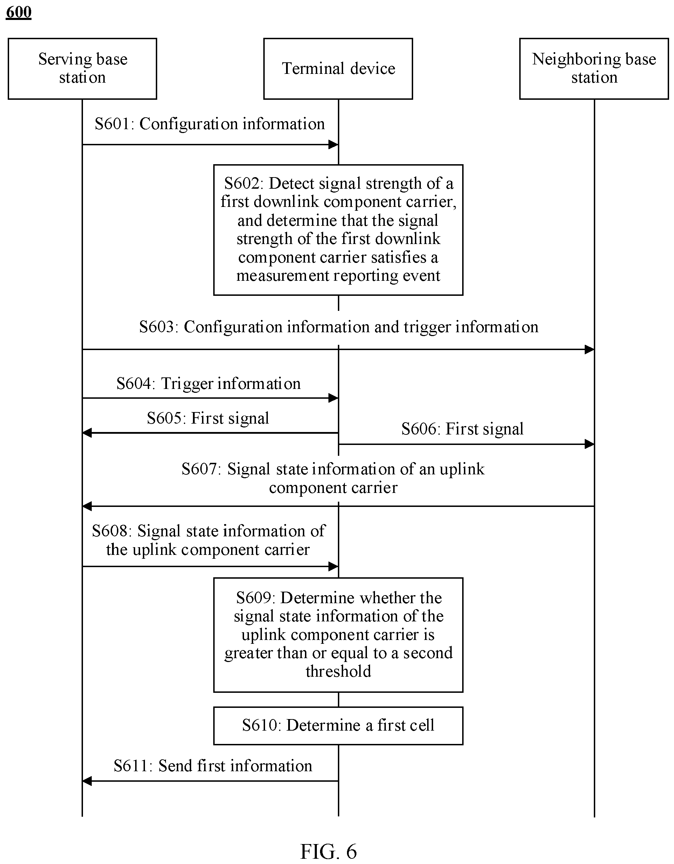

FIG. 6 is a schematic flowchart of a method for reporting cell information according to an embodiment of this application. In FIG. 6, the method in FIG. 2 is described in detail by using an example in which the first network device is a neighboring base station and the second network device is a serving base station. The serving base station may include a flexible cell, or may not include a flexible cell. The neighboring base station includes at least one flexible cell. In the following embodiments of this application, an example in which the terminal device is handed over from a cell in which the terminal device is currently located to any cell of the neighboring base station is used for description. As shown in FIG. 6, the method 600 may include step S610 to step S612. The following describes the steps in the method 600 in detail.

S610: The serving base station sends configuration information to the terminal device.

Specifically, the configuration information may be at least one of a to-be-measured cell in the neighboring base station and a reference signal configuration. The configuration information is information transmitted by the serving base station and the neighboring base station through an interface. In this application, information may be transferred between the serving base station and the neighboring base station by using an existing X2/Xn interface message, or may be transferred by using another X2/Xn interface message, for example, a dedicated message. This is not limited in this application.

If a cell in the neighboring base station is a flexible cell, the configuration information further includes first signal resource information. The first signal resource information may be first signal resource information corresponding to each uplink component carrier in the flexible cell, or may be first signal resource information corresponding to an uplink component carrier whose frequency is higher than that of the first downlink component carrier in the flexible cell.

For example, as shown in FIG. 4, the first signal resource information may be the first signal resource information corresponding to each uplink component carrier. For example, a cell #1 and a cell #2 are flexible cells, and the first signal resource information includes first signal resource information of a UCC 2, first signal resource information of a UCC 3, first signal resource information of a UCC 4, and first signal resource information of a UCC 0. The first signal resource information may be the first signal resource information corresponding to an uplink component carrier whose frequency is higher than that of the first downlink component carrier in the flexible cell. For example, in the cell #1, a frequency corresponding to a DCC 1 is 1.8 G, and uplink component carriers whose frequencies are higher than that of the DCC 1 include the UCC 2 whose frequency is 2.6 G and the UCC 3 whose frequency is 3.9 G. If a frequency corresponding to a DCC 5 in the cell #2 is 1.8 G, and an uplink component carrier whose frequency is higher than the frequency corresponding to the DCC 5 is the UCC 4 whose frequency is 3.9 G, the first signal resource information includes the first signal resource information of the UCC 2, the first signal resource information of the UCC 3, and the first signal resource information of the UCC 4.

It should be understood that, for ease of understanding only, the foregoing lists a quantity of cells of the serving base station and frequencies of uplink and downlink component carriers of each cell. However, this should not constitute any limitation on this application. The quantity of cells of the serving base station and the frequencies of uplink and downlink component carriers of each cell are not limited in this application.

Optionally, the first signal may be a sequence having a CP in a front or a RIM signal.

For example, the first signal may be at least one of an SRS, a CSI-RS, or a DMRS, or may be a newly defined signal. A resource carrying the first signal includes M OFDM symbols in time domain, and each symbol carries the same first signal. In addition, X CPs are added before (or at a most front end of) the M OFDM symbols, where M is a positive integer, and X≥1. For example, the newly defined signal may be a RIM-like signal. S602: The neighboring base station sends a reference signal, namely, a reference signal of the first downlink component carrier, to the terminal device on the first downlink component carrier.

S602: The terminal device detects signal strength of the first downlink component carrier, and determines that the signal strength of the first downlink component carrier satisfies a measurement reporting event.

For a specific implementation thereof, refer to S320. Herein, to avoid repetition, detailed descriptions are omitted.

Optionally, in S603, the serving base station sends configuration information and trigger information to the neighboring base station.

Specifically, both the serving base station and the neighboring base station need to know the configuration information and the trigger information. In a first possible implementation, if the serving base station sends the configuration information to the terminal device and sends the trigger information to the terminal, the serving base station also needs to send the configuration information and the trigger information to the neighboring base station. In a second possible implementation, if the neighboring base station sends the configuration information to the terminal device and sends the trigger information to the terminal, the neighboring base station also needs to send the configuration information and the trigger information to the serving base station. In a third possible implementation, if the serving base station sends the configuration information to the terminal device, and the neighboring base station sends the trigger information to the terminal device, the serving base station needs to send the configuration information to the neighboring base station, and the neighboring base station needs to send the trigger information to the serving base station. In a fourth possible implementation, if the serving base station sends the trigger information to the terminal device, and the neighboring base station sends the configuration information to the terminal device, the serving base station needs to send the trigger information to the neighboring base station, and the neighboring base station needs to send the configuration information to the serving base station.

It should be noted that when the serving base station sends the configuration information and the trigger information to the neighboring base station, or the neighboring base station sends the configuration information and the trigger information to the serving base station, the configuration information and the trigger information may be sent in a same message, or may be sent in different messages. When different messages are sent, a sequence of sending the configuration information and the trigger information is not limited in this embodiment of this application.

It should be noted that there is no strict sequence relationship between step S603, step S601, and step S602. To be specific, S603 may be performed before S601, or may be performed after S601, or S603 and S601 may be performed simultaneously. A sequence of the three steps is not limited in this embodiment of this application.

Optionally, in S604, the serving base station sends the trigger information to the terminal device.

Specifically, the trigger information may be sent by the serving base station to the terminal device, or may be sent by the neighboring base station to the terminal device. The trigger information indicates the terminal device to send the first signal. Alternatively, it may be understood as that after receiving the trigger information, the terminal device may send the first signal. Details are as follows:

S605: The terminal device sends the first signal to the serving base station; and/or the terminal device sends the first signal to the neighboring base station.

When the terminal device sends the first signal to the serving base station on the uplink component carrier, the neighboring base station may also detect the first signal sent by the terminal device on the uplink component carrier. In this case, the serving base station may detect the first signal on the uplink component carrier, obtain the channel state information of the uplink component carrier, and send the channel state information of the uplink component carrier to the terminal device. Alternatively, the neighboring base station may detect the first signal on the uplink component carrier, obtain the channel state information of the uplink component carrier, and send the channel state information to the serving base station. For example, step S607 is performed. The serving base station sends the channel state information to the terminal device. For example, step S608 is performed. Alternatively, the neighboring base station may detect the first signal on the uplink component carrier, obtain the channel state information of the uplink component carrier, and send the channel state information to the terminal device.

In a possible implementation, before sending the first signal, the terminal device may send a random access signal to the neighboring base station, and receives an RAR from the neighboring base station, where the RAR includes indication information of the first signal. The terminal device sends the first signal to a second base station on the at least one uplink component carrier, where the first signal is an SRS.

In a possible implementation, there is one first uplink signal in a plurality of uplink SRSs, and the neighboring base station measures the first uplink signal, and feeds back measured strength to the serving base station. Optionally, in every Y uplink signals, first Y-1 uplink signals are SRSs, and a Y^{th} uplink signal is the first uplink signal. The first network device configures a value of Y for the terminal device. Y is an integer and Y≥2.

S609: The terminal device determines whether the channel state information of the uplink component carrier is greater than or equal to the second threshold.

S610: The terminal device determines the first cell, where the first cell is a cell including an uplink component carrier whose channel state information is greater than or equal to the second threshold and the first downlink component carrier; or the terminal device may not determine the first cell, and determine only an uplink component carrier whose channel state information is greater than or equal to the second threshold and/or the first downlink component carrier as a component carrier that needs to be reported.

S611: The terminal device sends the first information to the serving base station.

For a specific implementation thereof, refer to S550 to S570. Herein, to avoid repetition, detailed descriptions are omitted.

In the solution, the terminal device sends the first signal to the first network device or the second network device on the uplink component carrier. The first signal may be detected by the neighboring base station, or may be used by the serving base station for detection. When being used by the neighboring base station for detection, the first signal may not be affected by timing advance (timing advance, TA) inaccuracy. To be specific, the base station may not be affected by an estimation deviation caused by TA inaccuracy when determining the channel state information. When the first signal is used by the serving base station for detection, the serving base station may obtain the channel state information based on the first signal. Therefore, no additional system overheads are caused.

In this application, the identifier may be understood as an index. In this application, embodiments may be used in combination, and are not listed one by one.

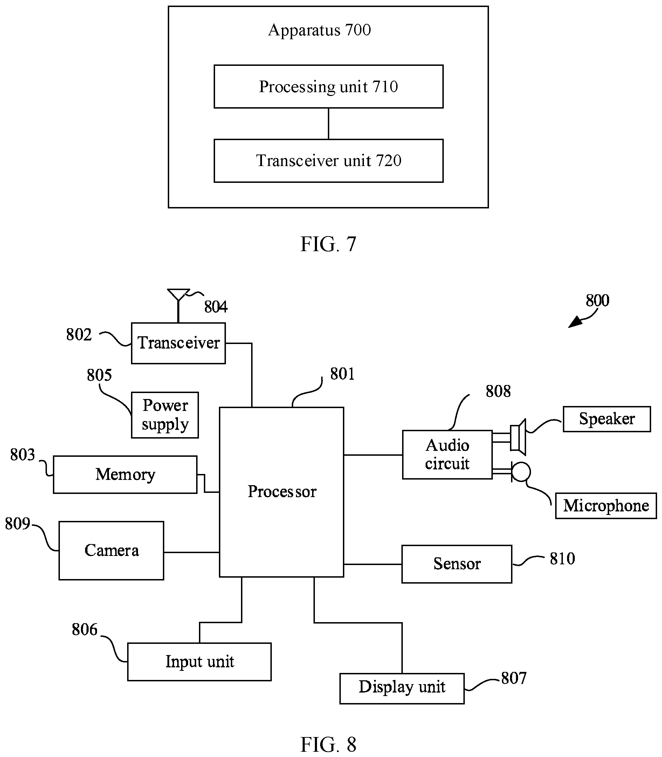

The foregoing describes in detail methods provided in embodiments of this application with reference to FIG. 2 to FIG. 6. The following describes in detail apparatuses provided in embodiments of this application with reference to FIG. 7 to FIG. 9.

FIG. 7 is a schematic block diagram of an apparatus for reporting cell information according to an embodiment of this application. As shown in FIG. 7, an apparatus 700 may include a processing unit 710 and a transceiver unit 720.

The processing unit 710 may be configured to perform content processing of the apparatus, for example, determine whether at least one uplink component carrier satisfies a first condition. The transceiver unit 720 may be configured to receive information sent by another apparatus, and may be further configured to send information to the another apparatus, for example, send signal strength of a first cell or channel state information of an uplink component carrier.

In a possible design, the apparatus 700 may correspond to the terminal device in the method embodiments, for example, may be a chip configured in the terminal device.

Specifically, the apparatus 700 may correspond to the terminal device in any one of the methods 200, 300, 500, and 600 according to embodiments of this application. The apparatus 700 may include modules configured to perform operations performed by the terminal device in the corresponding methods. In addition, units in the apparatus 700 are separately configured to implement the operations performed by the terminal device in the corresponding methods.

For example, when the apparatus 700 corresponds to the terminal device in the method 200 in FIG. 2, the processing unit 710 is configured to perform step S210, and the transceiver unit 720 is configured to perform step S220.

For example, when the apparatus 700 corresponds to the terminal device in the method 300 in FIG. 3, the processing unit 710 is configured to perform steps S340, S350, and S360, and the transceiver unit 720 is configured to perform steps S310, S320, S330, and S370.

For example, when the apparatus 700 corresponds to the terminal device in the method 500 in FIG. 5, the processing unit 710 is configured to perform steps S530, S560, and S570, and the transceiver unit 720 is configured to perform steps S510, S520, S540, S550, and S580.

For example, when the apparatus 700 corresponds to the terminal device in the method 600 in FIG. 6, the processing unit 710 is configured to perform steps S603, S610, and S611, and the transceiver unit 720 is configured to perform steps S601, S602, S605, S606, S607, S609, and S612.

Specifically, the processing unit 710 is configured to determine whether at least one uplink component carrier satisfies a first condition, where the at least one uplink component carrier belongs to a first cell, and the first cell is a cell of a first network device; and the transceiver unit 720 is configured to: when there is an uplink component carrier that satisfies the first condition in the at least one uplink component carrier, send at least one of the following items to the first network device or a second network device: signal strength of the first cell, an identifier of the first cell, signal strength of a downlink component carrier of the first cell, channel state information of the uplink component carrier that satisfies the first condition in the at least one uplink component carrier, and an identifier of the uplink component carrier that satisfies the first condition in the at least one uplink component carrier. The first condition is at least one of the following items: Signal strength of a downlink component carrier associated with the uplink component carrier is greater than or equal to a first threshold; and the channel state information of the uplink component carrier is greater than or equal to a second threshold.

Optionally, the downlink component carrier associated with the uplink component carrier belongs to a same frequency band as the uplink component carrier.

Optionally, the processing unit 710 is further configured to determine channel state indication information of the at least one uplink component carrier based on signal strength of a downlink component carrier associated with the at least one uplink component carrier.

Optionally, the transceiver unit 720 is further configured to: send a random access signal on the at least one uplink component carrier, where the random access signal is used by the first network device to measure a channel state of the at least one uplink component carrier; and receive a random access response RAR from the first network device, where the RAR includes channel state information of the at least one uplink component carrier.

Optionally, the transceiver unit 720 is further configured to: send a first signal on the at least one uplink component carrier, where the first signal is used by the first network device to measure a channel state of the at least one uplink component carrier; and receive channel state indication information of the at least one uplink component carrier from the second network device.

Optionally, the first signal is further used by the second network device to measure the channel state indication information of the at least one uplink component carrier.

Optionally, the first signal is a sequence having a cyclic prefix CP in a front or a remote interference management RIM signal.

Optionally, the channel state information of the uplink component carrier includes at least one of the following items: reference signal received power, reference signal strength, a path loss, and channel state indication information.

In another possible design, the apparatus 700 may correspond to the first network device in the method embodiments, for example, may be a chip configured in the first network device.

Specifically, the apparatus 700 may correspond to the first network device in any one of the methods 200, 300, 500, and 600 according to embodiments of this application. The apparatus 700 may include modules configured to perform operations performed by the first network device in the corresponding methods. In addition, units in the apparatus 700 are separately configured to implement the operations performed by the first network device in the corresponding methods.

For example, when the apparatus 700 corresponds to the first network device in the method 200 in FIG. 2, the transceiver unit module 720 is configured to perform step S220.

For example, when the apparatus 700 corresponds to the first network device in the method 300 in FIG. 3, the transceiver unit 720 is configured to perform steps S310 and S370.

For example, when the apparatus 700 corresponds to the first network device in the method 500 in FIG. 5, the transceiver unit 720 is configured to perform steps S510 and S580.

For example, when the apparatus 700 corresponds to the first network device in the method 600 in FIG. 6, the transceiver unit 720 is configured to perform steps S601, S604, S605, S606, S608, S609, and S612.

Specifically, the transceiver unit 720 is configured to receive at least one of the following items: signal strength of a first cell, an identifier of the first cell, signal strength of a downlink component carrier of the first cell, channel state indication information of an uplink component carrier that satisfies a first condition in at least one uplink component carrier, and an identifier of the uplink component carrier that satisfies the first condition in the at least one uplink component carrier. The at least one uplink component carrier belongs to the first cell, the first cell is a cell of the first network device, and the first condition is at least one of the following items: Signal strength of a downlink component carrier associated with the uplink component carrier is greater than or equal to a first threshold; and channel state information of the uplink component carrier is greater than or equal to a second threshold.

Optionally, the downlink component carrier associated with the uplink component carrier belongs to a same frequency band as the uplink component carrier.

Optionally, the transceiver unit 720 is further configured to: receive a random access signal on the at least one uplink component carrier; and send, by the first network device, a random access response RAR, where the RAR includes channel state information of the at least one uplink component carrier; and the processing unit 710 is configured to measure a channel state of the at least one uplink component carrier based on the random access signal.

Optionally, the transceiver unit 720 is further configured to receive a first signal on the at least one uplink component carrier; and the processing unit 710 is further configured to measure a channel state of the at least one uplink component carrier based on the first signal.

Optionally, the first signal is a sequence having a cyclic prefix CP in a front or a remote interference management RIM signal.

Optionally, the channel state information of the uplink component carrier includes at least one of the following items: reference signal received power, reference signal strength, a path loss, and channel state information.

In another possible design, the apparatus 700 may correspond to the second network device in the method embodiments, for example, may be a chip configured in the second network device.

Specifically, the apparatus 700 may correspond to the second network device in any one of the methods 200, 300, 500, and 600 according to embodiments of this application. The apparatus 700 may include modules configured to perform operations performed by the second network device in the corresponding methods. In addition, units in the apparatus 700 are separately configured to implement the operations performed by the second network device in the corresponding methods.

For example, when the apparatus 700 corresponds to the second network device in the method 200 in FIG. 2, the transceiver unit module 720 is configured to perform step S220.

For example, when the apparatus 700 corresponds to the second network device in the method 300 in FIG. 3, the transceiver unit 720 is configured to perform steps S320 and S330.

For example, when the apparatus 700 corresponds to the second network device in the method 500 in FIG. 5, the transceiver unit 720 is configured to perform steps S520, S540, and S550.

For example, when the apparatus 700 corresponds to the second network device in the method 600 in FIG. 6, the transceiver unit 720 is configured to perform steps S602, S604, S605, S607, and S608.

Specifically, the transceiver unit 720 is configured to receive at least one of the following items: signal strength of a first cell, an identifier of the first cell, signal strength of a downlink component carrier of the first cell, channel state indication information of an uplink component carrier that satisfies a first condition in at least one uplink component carrier, and an identifier of the uplink component carrier that satisfies the first condition in the at least one uplink component carrier. The at least one uplink component carrier belongs to the first cell, the first cell is a cell of a first network device, and the first condition is at least one of the following items: Signal strength of a downlink component carrier associated with the uplink component carrier is greater than or equal to a first threshold; and channel state information of the uplink component carrier is greater than or equal to a second threshold.

Optionally, the downlink component carrier associated with the uplink component carrier belongs to a same frequency band as the uplink component carrier.

Optionally, the transceiver unit 720 is further configured to receive a first signal on the at least one uplink component carrier, where the first signal is used by the first network device to measure a channel state of the at least one uplink component carrier.

Optionally, the processing unit 710 is configured to measure the channel state of the at least one uplink component carrier based on the first signal.

Optionally, the first signal is a sequence having a cyclic prefix CP in a front or a remote interference management RIM signal.

Optionally, the channel state information of the uplink component carrier includes at least one of the following items: reference signal received power, reference signal strength, a path loss, and channel state information.

It should be further understood that when the apparatus 700 is a terminal device, the processing unit 710 in the apparatus 700 may correspond to a processor 801 in a terminal device 800 shown in FIG. 8, and the transceiver unit 720 in the apparatus 700 may correspond to a transceiver 802 in the terminal device 800 shown in FIG. 8.

It should be further understood that when the apparatus 700 is a chip configured in a terminal device, the transceiver unit 720 in the apparatus 800 may be an input/output interface.

It should be further understood that when the apparatus 700 is a first network device, the processing unit 710 in the apparatus 700 may correspond to a processor 801 in a terminal device 800 shown in FIG. 8, and the transceiver unit 720 in the apparatus 700 may correspond to a transceiver 802 in the terminal device 800 shown in FIG. 8.

It should be further understood that when the communication apparatus 700 is a chip configured in a first network device, the transceiver unit 720 in the apparatus 700 may be an input/output interface.

It should be further understood that when the apparatus 700 is a second network device, the processing unit 710 in the apparatus 700 may correspond to a processor 801 in a terminal device 800 shown in FIG. 8, and the transceiver unit 720 in the apparatus 700 may correspond to a transceiver 802 in the terminal device 800 shown in FIG. 8.

It should be further understood that when the communication apparatus 700 is a chip configured in a second network device, the transceiver unit 720 in the apparatus 700 may be an input/output interface.

FIG. 8 is a schematic diagram of a structure of a terminal device 800 according to an embodiment of this application. The terminal device 800 may be applied to the system shown in FIG. 1, to perform functions of the terminal device in the method embodiments. As shown in FIG. 8, the terminal device 800 includes a processor 801 and a transceiver 802. Optionally, the terminal device 800 further includes a memory 803. The processor 801, the transceiver 802, and the memory 803 may communicate with each other through an internal connection path, to transfer a control signal and/or a data signal. The memory 803 is configured to store a computer program. The processor 801 is configured to invoke the computer program from the memory 803 and run the computer program, to control the transceiver 802 to send or receive a signal. Optionally, the terminal device 800 may further include an antenna 804, configured to send, by using a radio signal, uplink data or uplink control signaling output by the transceiver 802.

The processor 801 and the memory 803 may be integrated into one processing apparatus. The processor 801 is configured to execute program code stored in the memory 803 to implement the foregoing functions. During specific implementation, the memory 803 may alternatively be integrated into the processor 801, or may be independent of the processor 801. The processor 801 may correspond to the processing unit in FIG. 7.

The transceiver 802 may correspond to the transceiver unit in FIG. 7, and may also be referred to as a communication unit. The transceiver 802 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that, the terminal device 800 shown in FIG. 8 can implement processes related to the terminal device in any method embodiment in the method embodiments shown in FIG. 2 to FIG. 6. The operations or the functions of the modules in the terminal device 800 are separately used to implement corresponding procedures in the method embodiments. For details, refer to the descriptions in the method embodiments. To avoid repetition, detailed descriptions are appropriately omitted herein.

The processor 801 may be configured to perform an action that is internally implemented by the terminal device and that is described in the method embodiments, and the transceiver 802 may be configured to perform an action that is of sending from the terminal device to the first network device or the second network device or receiving from the first network device or the second network device and that is described in the method embodiments. For details, refer to the descriptions in the method embodiments. Details are not described herein again.

Optionally, the terminal device 800 may further include a power supply 805, configured to supply power to various components or circuits in the terminal device.

In addition, to improve functions of the terminal device, the terminal device 800 may further include one or more of an input unit 806, a display unit 807, an audio circuit 808, a camera 809, a sensor 810, and the like. The audio circuit may further include a speaker, a microphone, and the like.

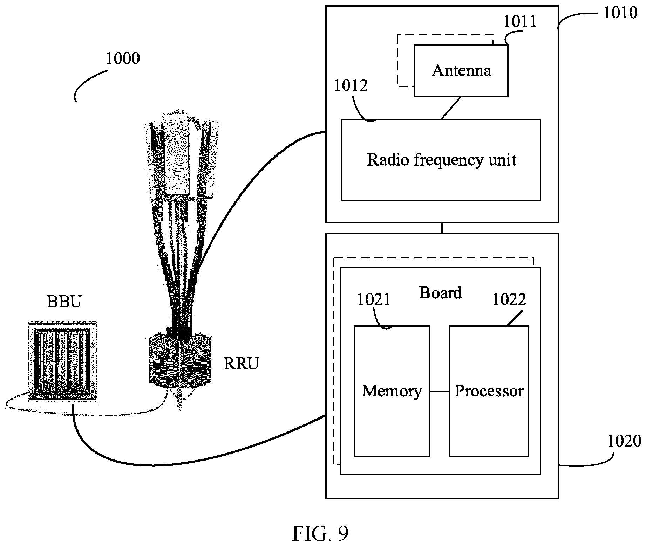

FIG. 9 is a schematic diagram of a structure of a first network device or a second network device according to an embodiment of this application, for example, may be a schematic diagram of a structure of a serving base station. The base station 1000 may be applied to the system shown in FIG. 1, to perform functions of the network device in the method embodiments. As shown in the figure, the base station 1000 may include one or more radio frequency units, such as a remote radio unit (remote radio unit, RRU) 1010 and one or more baseband units (BBU) (also referred to as distributed units (DU)) 1020. The RRU 1010 may be referred to as a transceiver module or a communication unit, and corresponds to the transceiver unit 820 in FIG. 8. Optionally, the transceiver module 1010 may also be referred to as a transceiver machine, a transceiver circuit, a transceiver, or the like, and may include at least one antenna 1011 and a radio frequency unit 1012. Optionally, the transceiver module 1010 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit). The RRU 1010 is mainly configured to send and receive radio frequency signals, and perform conversion between the radio frequency signal and a baseband signal. The BBU 1020 is mainly configured to perform baseband processing, control the base station, and the like. The RRU 1010 and the BBU 1020 may be physically disposed together, or may be physically disposed separately. In other words, a distributed base station is used.

The BBU 1020 is a control center of the base station, may also be referred to as a processing module, may correspond to the processing unit 810 in FIG. 8, and is mainly configured to complete a baseband processing function, such as channel coding, multiplexing, modulation, and spectrum spreading. For example, the BBU (the processing module) may be configured to control the base station to perform an operation procedure related to the network device in the method embodiments.

In an example, the BBU 1020 may include one or more boards, and a plurality of boards may jointly support a radio access network (for example, an LTE network) of a single access standard, or may separately support radio access networks (for example, an LTE network, a 5G network, or another network) of different access standards. The BBU 1020 further includes a memory 1021 and a processor 1022. The memory 1021 is configured to store necessary instructions and data. The processor 1022 is configured to control the base station to perform a necessary action, for example, configured to control the base station to perform an operation procedure related to the first network device or the second network device in the method embodiments. The memory 1021 and the processor 1022 may serve the one or more boards. In other words, a memory and a processor may be disposed on each board. Alternatively, the plurality of boards may share a same memory and a same processor. In addition, a necessary circuit may further be disposed on each board.

It should be understood that the base station 1000 shown in FIG. 9 can implement processes related to the first network device or the second network device in the method embodiments. The operations or the functions of the modules in the base station 1000 are separately used to implement corresponding procedures in the method embodiments. For details, refer to the descriptions in the method embodiments. To avoid repetition, detailed descriptions are appropriately omitted herein.

The BBU 1020 may be configured to perform an action that is implemented inside the first network device or the second network device and that is described in the method embodiments, and the RRU 1010 may be configured to perform an action that is of sending from the first network device or the second network device to the terminal device or receiving from the terminal device and that is described in the method embodiments. For details, refer to the descriptions in the method embodiments. Details are not described herein again.

According to the methods provided in embodiments of this application, this application further provides a computer program product. The computer program product includes instructions. When the instructions are run by a processor, the method of the terminal device in any one of the method embodiments is implemented.

According to the methods provided in embodiments of this application, this application further provides a computer program product. The computer program product includes instructions. When the instructions are run by a processor, the method of the first network device in any one of the method embodiments is implemented. According to the methods provided in embodiments of this application, this application further provides a computer program product. The computer program product includes instructions. When the instructions are run by a processor, the method of the second network device in any one of the method embodiments is implemented.

According to the methods provided in embodiments of this application, this application further provides a computer-readable medium. The computer readable medium includes instructions. When the instructions are run by a processor, the method of the terminal device in the method embodiments is implemented.

According to the methods provided in embodiments of this application, this application further provides a computer-readable medium. The computer readable medium includes instructions. When the instructions are run by a processor, the method of the first network device in the method embodiments is implemented.

According to the methods provided in embodiments of this application, this application further provides a computer-readable medium. The computer readable medium includes instructions. When the instructions are run by a processor, the method of the second network device in the method embodiments is implemented.

According to the methods provided in embodiments of this application, this application further provides a chip system. The chip system includes a processor, configured to invoke a computer program from a memory and run the computer program, so that a communication device in which the chip system is installed performs the method on the terminal device side in any one of the method embodiments.

According to the methods provided in embodiments of this application, this application further provides a chip system. The chip system includes a processor, configured to invoke a computer program from a memory and run the computer program, so that a communication device in which the chip system is installed performs the method of the first network device in any one of the method embodiments.

According to the methods provided in embodiments of this application, this application further provides a chip system. The chip system includes a processor, configured to invoke a computer program from a memory and run the computer program, so that a communication device in which the chip system is installed performs the method of the second network device in any one of the method embodiments.

According to the methods provided in embodiments of this application, this application further provides a system, including the one or more terminal devices and at least one of the one or more radio access network devices.

An embodiment of this application further provides a processing apparatus, including a processor and an interface. The processor is configured to perform the communication method in any one of the method embodiments.

It should be understood that the processing apparatus may be a chip. For example, the processing apparatus may be a field programmable gate array (field programmable gate array, FPGA), a general-purpose processor, a digital signal processor (digital signal processor, DSP), an application-specific integrated circuit (application-specific integrated circuit, ASIC), the field programmable gate array (field programmable gate array, FPGA), another programmable logic device, a discrete gate, a transistor logic device, a discrete hardware component, a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip. The processing apparatus may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by a hardware decoding processor, or may be executed and accomplished by using a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that memories of the systems and methods described in this specification include but are not limited to these and any memory of another proper type.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disc (solid state disc, SSD)), or the like.

The network device and the terminal device in the foregoing apparatus embodiments completely correspond to the network device and the terminal device in the method embodiments. A corresponding module or unit performs a corresponding step. For example, a communication unit (a transceiver) performs a receiving or sending step in the method embodiments, and a step other than the sending step and the receiving step may be performed by a processing module (a processor). For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, an execution thread, a program, or a computer. As illustrated by using figures, both a computing device and an application that runs on the computing device may be components. One or more components may reside within a process or an execution thread, and a component may be located on one computer or distributed between two or more computers. In addition, these components may be executed from various computer-readable media that store various data structures. For example, the components may communicate by using a local or remote process based on a signal having one or more data packets (for example, data from two components interacting with another component in a local system, in a distributed system, or across a network such as the Internet interacting with another system by using the signal).

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that, in embodiments of this application, numbers "first", "second", and the like are merely for distinguishing between different objects, for example, to distinguish between different network devices, and do not constitute a limitation on the scope of embodiments of this application. Embodiments of this application are not limited thereto.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "an item includes at least one of the following: A, B, ..., and X", in other words, more elements are included in the expression, a case to which the item is applicable may also be obtained according to the foregoing rule.

It may be understood that in embodiments of this application, the terminal device and/or the radio access network device may perform some or all steps in embodiments of this application. These steps or the operations are merely examples. In embodiments of this application, other operations or variations of various operations may be further performed. In addition, the steps may be performed in a sequence different from a sequence presented in embodiments of this application, and not all the operations in embodiments of this application may be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for reporting cell or component carrier information, comprising:
determining whether at least one uplink component carrier satisfies a first condition, wherein the at least one uplink component carrier belongs to a first cell, and the first cell is a cell of a first network device; and
when there is an uplink component carrier that satisfies the first condition in the at least one uplink component carrier, sending at least one of the following items to the first network device or a second network device: signal strength of the first cell, an identifier of the first cell, signal strength of a downlink component carrier of the first cell, channel state information of the uplink component carrier that satisfies the first condition in the at least one uplink component carrier, and an identifier of the uplink component carrier that satisfies the first condition in the at least one uplink component carrier, wherein
the first condition is at least one of the following items:
signal strength of a downlink component carrier associated with the uplink component carrier is greater than or equal to a first threshold; and
the channel state information of the uplink component carrier is greater than or equal to a second threshold.

2. The method according to claim 1, wherein the downlink component carrier associated with the uplink component carrier belongs to a same frequency band as the uplink component carrier.

3. The method according to claim 1 or 2, further comprising:
determining channel state information of the at least one uplink component carrier based on signal strength of a downlink component carrier associated with the at least one uplink component carrier.

4. The method according to claim 1 or 2, wherein the method further comprises:
sending a random access signal on the at least one uplink component carrier, wherein the random access signal is used by the first network device to measure a channel state of the at least one uplink component carrier; and
receiving a random access response RAR from the first network device, wherein the RAR comprises channel state information of the at least one uplink component carrier.

5. The method according to claim 1 or 2, wherein the method further comprises:
sending a first signal on the at least one uplink component carrier, wherein the first signal is used by the first network device to measure a channel state of the at least one uplink component carrier; and
receiving channel state information of the at least one uplink component carrier from the second network device.

6. The method according to claim 5, wherein the first signal is further used by the second network device to measure the channel state of the at least one uplink component carrier.

7. The method according to claim 5 or 6, wherein the first signal is a sequence having a cyclic prefix CP in a front or a remote interference management RIM signal.

8. The method according to any one of claims 1 to 7, wherein the channel state information of the uplink component carrier comprises at least one of the following items: reference signal received power, reference signal strength, a path loss, and channel state information.

9. A method for reporting cell or component carrier information, comprising:
receiving at least one of the following items: signal strength of a first cell, an identifier of the first cell, signal strength of a downlink component carrier of the first cell, channel state indication information of an uplink component carrier that satisfies a first condition in at least one uplink component carrier, and an identifier of the uplink component carrier that satisfies the first condition in the at least one uplink component carrier, wherein
the at least one uplink component carrier belongs to the first cell, the first cell is a cell of a first network device, and the first condition is at least one of the following items:
signal strength of a downlink component carrier associated with the uplink component carrier is greater than or equal to a first threshold; and
the channel state information of the uplink component carrier is greater than or equal to a second threshold.

10. The method according to claim 9, wherein the downlink component carrier associated with the uplink component carrier belongs to a same frequency band as the uplink component carrier.

11. The method according to claim 9 or 10, wherein when the receiving at least one of the following items is receiving, by the first network device, at least one of the following items, the method further comprises:
receiving, by the first network device, a random access signal on the at least one uplink component carrier;
measuring, by the first network device, a channel state of the at least one uplink component carrier based on the random access signal; and
sending, by the first network device, a random access response RAR, wherein the RAR comprises channel state information of the at least one uplink component carrier.

12. The method according to claim 9 or 10, wherein when the receiving at least one of the following items is receiving, by the first network device, at least one of the following items, the method further comprises:
receiving, by the first network device, a first signal on the at least one uplink component carrier; and
measuring, by the first network device, a channel state of the at least one uplink component carrier based on the first signal.

13. The method according to claim 9 or 10, wherein when the receiving at least one of the following items is receiving, by a second network device, at least one of the following items, the method further comprises:
receiving, by the second network device, a first signal on the at least one uplink component carrier, wherein the first signal is used by the first network device to measure a channel state of the at least one uplink component carrier.

14. The method according to claim 13, wherein the method further comprises:
measuring, by the second network device, the channel state of the at least one uplink component carrier based on the first signal.

15. The method according to either of claims 12 and 13, wherein the first signal is a sequence having a cyclic prefix CP in a front or a remote interference management RIM signal.

16. The method according to any one of claims 9 to 15, wherein the channel state information of the uplink component carrier comprises at least one of the following items: reference signal received power, reference signal strength, a path loss, and channel state information.

17. An apparatus for reporting cell or component carrier information, comprising:
a processing unit, configured to determine whether at least one uplink component carrier satisfies a first condition, wherein the at least one uplink component carrier belongs to a first cell, and the first cell is a cell of a first network device; and
a transceiver unit, configured to: when there is an uplink component carrier that satisfies the first condition in the at least one uplink component carrier, send at least one of the following items to the first network device or a second network device: signal strength of the first cell, an identifier of the first cell, signal strength of a downlink component carrier of the first cell, channel state information of the uplink component carrier that satisfies the first condition in the at least one uplink component carrier, and an identifier of the uplink component carrier that satisfies the first condition in the at least one uplink component carrier, wherein
the first condition is at least one of the following items:
signal strength of a downlink component carrier associated with the uplink component carrier is greater than or equal to a first threshold; and
the channel state information of the uplink component carrier is greater than or equal to a second threshold.

18. The apparatus according to claim 17, wherein the downlink component carrier associated with the uplink component carrier belongs to a same frequency band as the uplink component carrier.

19. The apparatus according to claim 17 or 18, wherein the processing unit is further configured to:
determine channel state information of the at least one uplink component carrier based on signal strength of a downlink component carrier associated with the at least one uplink component carrier.

20. The apparatus according to claim 17 or 18, wherein the transceiver unit is further configured to:
send a random access signal on the at least one uplink component carrier, wherein the random access signal is used by the first network device to measure a channel state of the at least one uplink component carrier; and
receive a random access response RAR from the first network device, wherein the RAR comprises channel state information of the at least one uplink component carrier.

21. The apparatus according to claim 17 or 18, wherein the transceiver unit is further configured to:
send a first signal on the at least one uplink component carrier, wherein the first signal is used by the first network device to measure a channel state of the at least one uplink component carrier; and
receive channel state information of the at least one uplink component carrier from the second network device.

22. The apparatus according to claim 21, wherein the first signal is further used by the second network device to measure the channel state of the at least one uplink component carrier.

23. The apparatus according to claim 21 or 22, wherein the first signal is a sequence having a cyclic prefix CP in a front or a remote interference management RIM signal.

24. The apparatus according to any one of claims 17 to 23, wherein the channel state information of the uplink component carrier comprises at least one of the following items: reference signal received power, reference signal strength, a path loss, and channel state information.

25. An apparatus for reporting cell or component carrier information, comprising:
a transceiver unit, configured to receive at least one of the following items: signal strength of a first cell, an identifier of the first cell, signal strength of a downlink component carrier of the first cell, channel state information of an uplink component carrier that satisfies a first condition in at least one uplink component carrier, and an identifier of the uplink component carrier that satisfies the first condition in the at least one uplink component carrier, wherein
the at least one uplink component carrier belongs to the first cell, the first cell is a cell of a first network device, and the first condition is at least one of the following items:
signal strength of a downlink component carrier associated with the uplink component carrier is greater than or equal to a first threshold; and
the channel state information of the uplink component carrier is greater than or equal to a second threshold.

26. The apparatus according to claim 25, wherein the downlink component carrier associated with the uplink component carrier belongs to a same frequency band as the uplink component carrier.

27. The apparatus according to claim 25 or 26, wherein the transceiver unit is further configured to receive a random access signal on the at least one uplink component carrier;
a processing unit is configured to measure a channel state of the at least one uplink component carrier based on the random access signal; and
the transceiver unit is further configured to send a random access response RAR, wherein the RAR comprises channel state information of the at least one uplink component carrier.

28. The apparatus according to claim 25 or 26, wherein the transceiver unit is further configured to receive a first signal on the at least one uplink component carrier; and
a processing unit is further configured to measure a channel state of the at least one uplink component carrier based on the first signal.

29. The apparatus according to claim 25 or 26, wherein the transceiver unit is further configured to:
receive a first signal on the at least one uplink component carrier, wherein the first signal is used by the first network device to measure a channel state of the at least one uplink component carrier; and

30. The apparatus according to claim 29, wherein the apparatus further comprises:
a processing unit, configured to measure the channel state of the at least one uplink component carrier based on the first signal.

31. The apparatus according to any one of claims 28 to 30, wherein the first signal is a sequence having a cyclic prefix CP in a front or a remote interference management RIM signal.

32. The apparatus according to any one of claims 25 to 31, wherein the channel state information of the uplink component carrier comprises at least one of the following items: reference signal received power, reference signal strength, a path loss, and channel state information.

33. A communication apparatus, wherein the communication apparatus comprises a processor and a storage medium, the storage medium stores instructions, and when the instructions are run by the processor, the communication apparatus is enabled to perform the method according to any one of claims 1 to 8 or the method according to any one of claims 9 to 16.

34. A computer-readable storage medium, wherein the computer-readable storage medium comprises instructions, and when the instructions are run by a processor, the method according to any one of claims 1 to 8 or the method according to any one of claims 9 to 16 is implemented.

35. A computer program product, wherein the computer program product comprises instructions, and when the instructions are run by a processor, the method according to any one of claims 1 to 8 or the method according to any one of claims 9 to 16 is implemented.
